(19) **Europäisches Patentamt / European Patent Office / Office européen des brevets**

(11) **EP 3 026 519 A1**

(12) **EUROPEAN PATENT APPLICATION**

(43) Date of publication:
01.06.2016 Bulletin 2016/22

(51) Int Cl.:
*G05B 23/02* (2006.01)      *G06F 11/34* (2006.01)
*G06Q 50/06* (2012.01)

(21) Application number: 15196145.5

(22) Date of filing: 24.11.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 24.11.2014 US 201462083873 P

(71) Applicant: Schneider Electric Industries SAS
92500 Rueil-Malmaison (FR)

(72) Inventors:
• SHARMA, Mayank
34975 Lattes Cedex (FR)
• JARDIM, Mario Roberto
34975 Lattes Cedex (FR)

(74) Representative: Cooley (UK) LLP
Dashwood
69 Old Broad Street
London EC2M 1QS (GB)

(54) **A PROCESSOR-IMPLEMENTED METHOD FOR DETERMINING AN EXPECTED OVERALL PERFORMANCE VALUE OF A SUBSTATION AUTOMATION SYSTEM**

(57) A processor-implemented method for determining an expected overall performance value of a substation automation system is disclosed. The method comprises causing a processor to provide a plurality of virtual Intelligent Electronic Device (IED) representations, each virtual IED representation being associated with a respective data structure defining a previously generated physical IED performance profile; obtain a data structure defining an arrangement of the provided plurality of virtual IED representations, the arrangement relating to a substation automation system test configuration; receive data defining arrangement stimulation test values; and determine an expected overall performance value of the arrangement by combining performance metrics for each of the virtual IED representations in the arrangement in accordance with the arrangement, the performance metric for each of the virtual IED representations being retrieved from the respective data structure defining the previously generated physical IED performance profile by addressing the data structure using the arrangement stimulation test values.

Figure 1

Example of comprising elements engaged in the development of an IED performance profile.

**Description**

**FIELD**

The invention relates to a processor-implemented method for determining an expected overall performance value of a substation automation system.

**BACKGROUND**

Intelligent Electronic Devices (IED) are microprocessor-based devices capable to control, monitor, meter and protect automated power systems or Substation Automation Solutions (SAS) in the electric industry. The International Electrotechnical Commission (IEC) 61850 is an international standard method for the integration and communication of IEDs made by different manufacturing producers.

IEDs are used as controllers of power system equipment such as circuit breakers, transformer and capacitors banks. An IED can be used to generate control commands to protect a power system from critical voltages, currents and/or frequencies. The control commands that can be generated by an IED can trip circuits' breakers in order to move a power system back to normal operation.

IEDs may carry out a traditional function such as metering or protection, but more often than not, their functionality is significantly enhanced and cannot be easily compared to their counterparts implemented using earlier technologies. As a consequence, evaluation of the performance of SAS systems is not straightforward due to the complexity and performance improvements offered by new IEDs. Moreover, the complexity increases in SAS systems comprising more than one IED that may or may not be made by the same manufacturer.

This difficulty in evaluation is compounded by the fact that IEDs do not always behave in accordance with the specifications published by their manufacturers. Thus, the manufacturers' specifications are not a reliable predictor of expected performance for a SAS system employing IEDs, especially when multiple IEDs are used in the system and/or the IEDs are sourced from different manufacturers.

**SUMMARY**

In accordance with a first aspect of the invention, there is provided a processor-implemented method for determining an expected overall performance value of a substation automation system, the method comprising causing a processor to perform the following steps:

providing a plurality of virtual Intelligent Electronic Device (IED) representations, each virtual IED representation being associated with a respective data structure defining a previously generated physical IED performance profile;
obtaining a data structure defining an arrangement of the provided plurality of virtual IED representations, the arrangement relating to a substation automation system test configuration;
receiving data defining arrangement stimulation test values; and
determining an expected overall performance value of the arrangement by combining performance metrics for each of the virtual IED representations in the arrangement in accordance with the arrangement, the performance metric for each of the virtual IED representations being retrieved from the respective data structure defining the previously generated physical IED performance profile by addressing the data structure using the arrangement stimulation test values.

Instead of relying on the manufacturers' specifications, the invention provides a method for determining overall performance of a substation automation system that is based on previously generated physical IED performance profiles. In other words, the invention allows simulation of the substation automation system using real-world performance data that can been measured under a variety of relevant conditions (both environmental and configurational). Thus, the invention results in more accurate simulation of IED behaviour in a production environment and results in more reliable estimation of overall performance of a substation automation system.

Thus, the invention provides a technical solution to enable accurate estimation of overall performance of substation automation systems comprising arrangements of more than one IED. The disclosed technical solution is particularly useful to the designers of such systems when making decisions on the design of IED arrangements in substation automation systems before the deployment to a production environment.

The arrangement is the manner in which the plurality of virtual IED representations are connected together. It can thus be used to represent any desired physical, real-world arrangement of IEDs and their interconnections. The arrangement stimulation test values are values of signals to be provided at the inputs of the IEDs.

The method may further comprise generating one or more of the physical IED performance profiles by performing a descriptive statistical analysis and an inferential statistical analysis on measured values of an IED performance metric to determine an expected value for the IED performance metric.

The generation of one or more of the physical IED performance profiles may further comprise performing an additional inferential statistical analysis, wherein the additional inferential statistical analysis is a regression analysis of at least one independent control variable affecting an IED performance metric, whereby the expected value for the IED performance metric is determined under a plurality of stress conditions.

The stress conditions may be any combination of arrangement stimulation test values, environmental factors (such as temperature, humidity etc.) and configuration variables for the IEDs.

The method may further comprise optimizing the expected overall performance value of the arrangement using a single variable optimization algorithm or a multi-variable optimization algorithm. Details of suitable single variable and multi-variable optimization algorithms are provided later in the detailed description. These algorithms should be understood to be combinable with the subject-matter of the method of the first aspect in isolation of other features disclosed in the detailed description.

The arrangement stimulation test values typically comprise stimuli triggers and input factors. The stimuli triggers may comprise generic object oriented substation event (GOOSE) transmissions, fault level currents, sample measurement values and opto-inputs. The input factors may comprise a number of configured GOOSE control blocks, a number of GOOSE messages received by the IED at the same time as a stimulus trigger, a number of virtual output states changed by a stimulus trigger, manufacture message specification report, web services, internal logic schemes, and inputs from a human machine interface.

In accordance with a second aspect of the invention, there is provided a processor-implemented method for creating a physical IED performance profile for an IED, the method comprising causing a processor to perform the following steps:

    generating stimulation test values for stimulating an IED;
    measuring a plurality of performance metrics of the IED corresponding to the stimulation test values;
    performing a descriptive statistical analysis and an inferential statistical analysis on the plurality of performance metrics to determine expected values of the plurality of performance metrics; and
    generating a data structure defining the physical IED performance profile, in which the expected values of the plurality of performance metrics are addressable using the stimulation test values.

The invention therefore also provides a method for creating physical IED performance profiles to enable the simulation of a substation automation system using real-world performance data measured under a variety of relevant conditions (both environmental and configurational). Thus, the invention allows the gathering of data for the creation of profiles that enable more accurate simulation of IED behaviour in a production environment, resulting in more reliable estimation of overall performance of a substation automation system.

The method of the second aspect may further comprise performing an additional inferential statistical analysis to determine expected values of the plurality of performance metrics, wherein the additional inferential statistical analysis is a regression analysis of at least one independent control variable affecting an IED performance metric, whereby the expected value for the IED performance metric is determined under a plurality of stress conditions.

The stimulation test values typically comprise stimuli triggers and input factors. The stimuli triggers may comprise GOOSE transmissions, fault level currents, sample measurement values and opto-inputs. The input factors may comprise a number of configured GOOSE control blocks, a number of GOOSE messages received by the IED at the same time as a stimulus trigger, a number of virtual output states changed by a stimulus trigger, manufacture message specification report, web services, internal logic schemes, and inputs from a human machine interface.

The method may further comprise configuring the IED to behave as a device selected from the group comprising: (a) breaker controllers; (b) voltage regulators; (c) remote terminal units; (d) load tap changers; (e) recloser controllers; (f) digital fault recorders; and (g) programmable logic controllers.

In accordance with a third aspect of the invention, there is provided a non-transitory processor-readable medium storing code representing instructions to be executed by a processor, the code comprising instructions to cause the processor to perform the method of the first or second aspects when executed.

In accordance with a fourth aspect of the invention, there is provided an apparatus comprising a processor and a memory disposed in communication with the processor and storing instructions which cause the processor to perform the method of the first or second aspects when executed.

In accordance with a fifth aspect of the invention, there is provided a processor implemented method for determining an expected overall performance value of a substation automation system in non-emulated scenarios, comprising:

    providing, via a computer, a plurality of virtual Intelligent Electronic Device (IED) representations, wherein each virtual IED representation is associated with at least one previously generated physical IED performance profile generated using emulated stimuli transmitted to a physical IED in at least one configuration state;

obtaining, via a processor, an arrangement design of the provided plurality of virtual IED representations, wherein the arrangement corresponds to an untested contemplated substation automation system configuration;

receiving arrangement stimulation test values, wherein the arrangement stimulation test values are comprised of a designation of emulated stimuli triggers and a designation of emulated input factors for use in profiling the arrangement design under a plurality of stress conditions;

determining an expected overall performance value of the arrangement design, wherein the determination is a function of at least the arrangement design, the arrangement stimulation test values, and the at least one previously generated physical IED performance profile.

Instead of relying on the manufacturers' specifications, the invention therefore provides a method for determining overall performance of a substation automation system that is based on previously generated physical IED performance profiles. In other words, the invention allows simulation of the substation automation system using real-world performance data that can been measured under a variety of relevant conditions (both environmental and configurational). Thus, the invention results in more accurate simulation of IED behaviour in a production environment and results in more reliable estimation of overall performance of a substation automation system.

The at least one previously generated physical IED performance profile may be based on the results of at least one descriptive statistical analysis, and at least one inferential statistical analysis to determine expected performance values of the IED under a plurality of stress conditions;

The at least one previously generated physical IED performance profile may be further based on the results of an additional inferential statistical analysis, wherein the additional inferential statistical analysis is a regression analysis of at least one independent control variable affecting an IED device performance metric to determine expected performance values of the IED device under a plurality of stress conditions.

The arrangement design may comprise at least two or more virtual IED representations wherein at least two of the representations correspond to two different IED models.

The expected overall performance value of the arrangement design may be optimized by a single variable optimization algorithm or a multi-variable optimization algorithm.

The arrangement design may comprise at least two or more virtual IED representations connected in a series, and the first and any intermediate virtual IED representation in the series independently processes messages based on their physical IED performance profile under the occurring stress conditions and thereafter, forwards the message to the next virtual IED representation in the series.

The stress conditions affecting at least two of the virtual IED representations connected in the arrangement may be different.

The arrangement design may comprise at least two or more competing virtual IED representations connected to a receiver virtual IED representation, the competing virtual IED representations independently process messages based on their physical IED performance profile under the occurring stress conditions and thereafter, the receiver virtual IED representation processes the message that was received at the earliest time.

The stress conditions for at least two of the virtual IED representations connected in the arrangement may be different.

The arrangement design may comprise at least two or more competing virtual IED representations connected to an intermediate virtual IED representation, and the intermediate virtual IED representation may also be connected to two or more receiver virtual IED representations.

The virtual IED representations may independently process messages based on their IED processing configuration under the stress conditions and the stress conditions affecting at least two of the virtual IED representations connected in the arrangement may be different.

The method may further comprise identifying a virtual link connecting a competing virtual IED representation, an intermediate virtual IED representation and a receiver virtual IED representation with the slowest reaction time in the arrangement.

The emulated stimuli triggers may comprise generic object oriented substation event transmissions, fault level currents, sample measurement values and opto-inputs.

The emulated input factors may comprise a number of configured generic object oriented substation event control blocks, a number of generic object oriented substation event messages received by the intelligent electronic device at the same time as a stimulus trigger, a number of virtual output state changed by a stimulus trigger, manufacture message specification report, web services, internal logic schemes, and inputs from a human machine interface.

In accordance with a sixth aspect of the invention, there is provided a method for creating a customized physical IED performance profile for an intelligent electronic device, comprising:

receiving by an intelligent electronic device (IED) a plurality of stimuli triggers and a plurality of input factors to submit the IED device to a plurality of stress conditions;

capturing, via a processor, a plurality of performance values of said intelligent electronic device under the stress conditions;

executing, via the processor, at least one descriptive statistical analysis summarizing the intelligent electronic device performance values under the stress conditions;

executing, via the processor, at least one inferential statistical analysis correlating the stress conditions with an intelligent electronic device performance metric;

building a customized physical IED performance profile based on the results of the at least one descriptive statistical analysis, and the at least one inferential statistical analysis to determine expected performance values of the IED under non-emulated stress conditions; and

associating the customized physical IED performance profile with a virtual IED representation.

The invention therefore also provides a method for creating physical IED performance profiles to enable the simulation of a substation automation system using real-world performance data measured under a variety of relevant conditions (both environmental and configurational). Thus, the invention allows the gathering of data for the creation of profiles that enable more accurate simulation of IED behaviour in a production environment, resulting in more reliable estimation of overall performance of a substation automation system.

The method may further comprise: executing via a processor an additional inferential statistical analysis, wherein the additional inferential statistical analysis is a regression analysis of at least one independent control variable affecting an intelligent electronic device performance metric; building a customized physical IED performance profile based on the results of the at least one descriptive statistical analysis, the at least one inferential statistical analysis, and at least one regression analysis to determine expected performance values of the IED under non-emulated stress conditions; and associating the customized physical IED performance profile with a virtual IED representation.

The descriptive statistical analysis may comprise at least one measure of location and at least one measure of spread;

The stimuli triggers may comprise generic object oriented substation event transmissions, fault level currents, sample measurement values and opto-inputs.

The input factors may comprise a number of configured generic object oriented substation event control blocks, a number of generic object oriented substation event messages received by the intelligent electronic device at the same time as a stimulus trigger, a number of virtual output state changed by a stimulus trigger manufacture message specification report, web services, internal logic schemes, and inputs from a human machine interface.

The IED device may have been previously configured to behave as an IED device selected from a group comprising: (a) Breaker controllers; (b) voltage regulators; (c) remote terminal units; (d) load tap changers; (e) recloser controllers; (f) digital fault recorders; and (g) programmable logic controllers.

In accordance with a seventh aspect of the invention, there is provided a non-transitory processor-readable medium storing code representing instructions to be executed by a processor, the code comprising code to cause the processor to perform the method of the fifth or sixth aspects of the invention.

In accordance with an eighth aspect of the invention, there is provided an apparatus, comprising: a processor; and a memory disposed in communication with the processor and storing processor-issuable instructions to perform the method of the fifth or sixth aspects of the invention.

In accordance with a ninth aspect of the invention, there is provided an apparatus, comprising: a processor; and a memory disposed in communication with the processor and storing processor-issuable instructions to:

provide a plurality of virtual Intelligent Electronic Device (IED) representations, wherein each virtual IED representation is associated with at least one previously generated physical IED performance profile generated using emulated stimuli transmitted to a physical IED in at least one configuration state;

obtain an arrangement design of the provided plurality of virtual IED representations, wherein the arrangement corresponds to an untested contemplated substation automation system configuration;

receive arrangement stimulation test values, wherein the arrangement stimulation test values are comprised of a designation of emulated stimuli triggers and a designation of emulated input factors for use in profiling the arrangement design under a plurality of stress conditions;

determine an expected overall performance value of the arrangement design, wherein the determination is a function of at least the arrangement design, the arrangement stimulation test values, and the at least one previously generated physical IED performance profile.

In accordance with a tenth aspect of the invention, there is provided an apparatus, comprising: a processor; and a memory disposed in communication with the processor and storing processor-issuable instructions to:

receive via an intelligent electronic device (IED) a plurality of stimuli triggers and a plurality of input factors to submit the IED device to a plurality of stress conditions;

capture a plurality of performance values of said intelligent electronic device under the stress conditions;

execute at least one descriptive statistical analysis summarizing the intelligent electronic device performance values under the stress conditions;

execute at least one inferential statistical analysis correlating the stress conditions with an intelligent electronic device performance metric;

build a customized physical IED performance profile based on the results of the at least one descriptive statistical analysis, and the at least one inferential statistical analysis to determine expected performance values of the IED under non-emulated stress conditions; and

associate the customized physical IED performance profile with a virtual IED representation.

## BRIEF DESCRIPTION OF THE DRAWINGS

FIGURE 1 shows an example block diagram comprising elements engaged in the development of an IEDP performance profile, in one embodiment;

FIGURE 2 shows exemplary use cases of the IED integrated design environment, in one embodiment;

FIGURES 3A-B show an example of Test Set Application Component to capture performance values e.g., a **TSA Component**, in one embodiment;

FIGURE 4A-B show an example of GOOSE and hardwired response time measurements for an IED, in one embodiment;

FIGURE 5 shows an example of sampling technique of performance values of an IED for profile generation, in one embodiment;

FIGURE 6A-C show exemplary IED arrangements built in the IED integrated development environment, in one embodiment;

FIGURE 7 shows an example of an IED design and testing information system implemented in a service oriented paradigm structure, in one embodiment; and

FIGURE 8 shows a block diagram illustrating aspects of an exemplary embodiment of an IEDP user interface controller, in one embodiment.

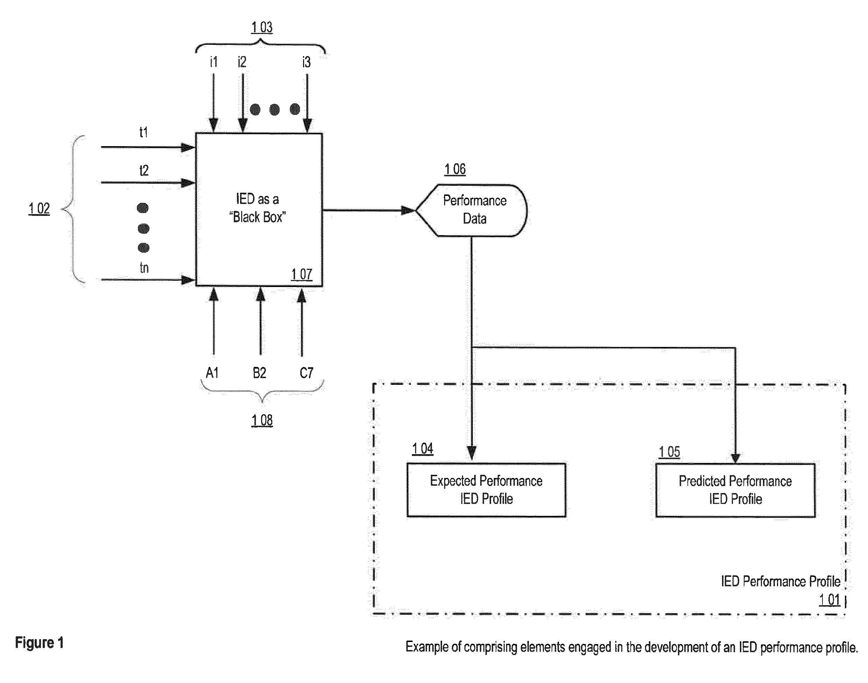

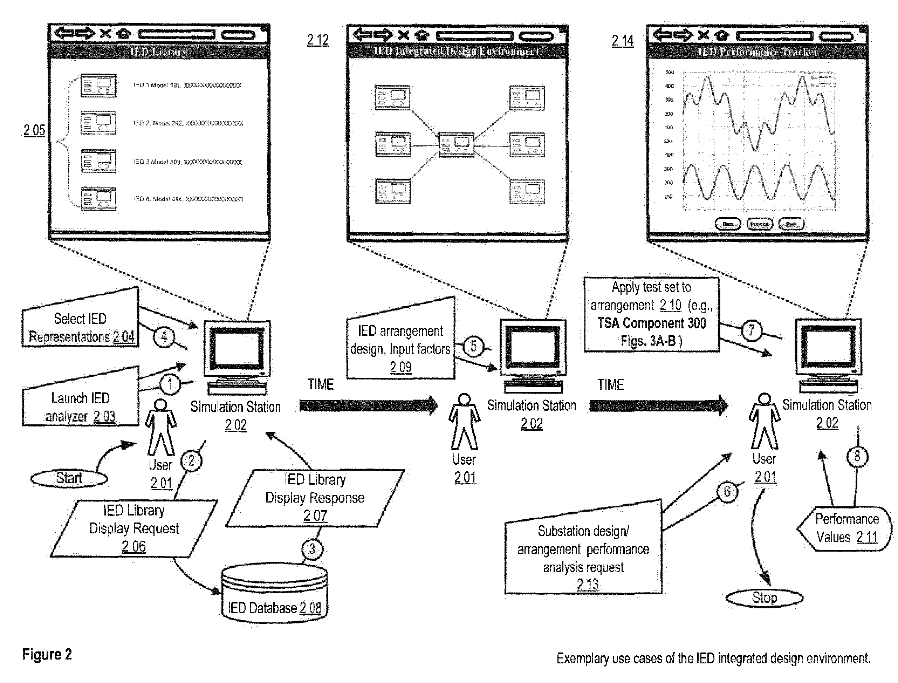

The leading number of each reference number within the drawings indicates the figure in which that reference number is introduced and/or detailed. As such, a detailed discussion of reference number 101 would be found and/or introduced in Figure 1. Reference number 201 is introduced in Figure 2A, 2B, etc.

## DETAILED DESCRIPTION

In some embodiments, an INTELLIGENT ELECTRONIC DEVICE RESPONSE TIME PERFORMANCE OPTIMIZATION APPARATUSES (hereinafter "IEDP") transforms a plurality of stimuli, configured environmental variables and IED arrangements, via IEDP components, into performance measurements and optimized versions of an inputted IEDP arrangements.

FIGURE 1 shows an example block of comprising elements engaged in the development of an IEDP performance profile, in some embodiments of the IEDP. In some embodiments, a plurality of stimuli triggers **102** is inputted to an IED device **107**. The plurality of stimuli triggers can include but is not limited to generic object oriented substation event transmission, fault level currents, sample measurement values and opto-inputs and the like stimuli triggers. Specifically such stimuli triggers can comprise information coming as Generic Object Oriented Substation Event (GOOSE) messages, sampled Measurement Values (SMVs - IEC 61850-9-2), on analog inputs (voltage and current measured on IEDs current transformer (CT), voltage transformer (VT), low power current transformer (LPCT), low power voltage transformer (LPVT), other NonConventional Instrument Transformer (NCIT) and/or information coming from other digital communication interfaces to higher, horizontal or lower level communication (e.g., MODBUS, 103,104,101, DNP3, IEC 61850-90-5, 90-1, IEEE C37.118), which can be acquired on an IED's analog or digital inputs.

Additionally, in some embodiments the IED **107** is programmed or configured by specifying input factors for a plurality of configuration variables **103** including but not limited to the number of GOOSE Control Blocks (GoCBs), the number of GOOSE messages received by an IED (depending on the embodiment, at a random time, at the same time and/or substantially at the same time as a stimulus trigger, for example 10 milliseconds(ms), 15ms, 100ms, 200ms, 500ms and/or the like time intervals before or after the stimulus trigger), the number of virtual output state changed after receiving a stimulus trigger, manufacture message specification report, web services, internal logic schemes, inputs from a human machine interface and/or the like IED configuration variables. Specifically such configuration variables can comprise the number of subscribed GOOSE messages coming at a random, same or substantially the same time as any of the stimuli trigger, the number of configured GoCBs on the IED, the number of virtual outputs state changes published as GOOSE message from an IED, information via MMS/reporting (IEC 61850-8-1 station bus), Web services (IEC 61850 8-2), internal logic schemes, and inputs from a Human Machine Interface (HMI) (e.g., function keys) and the like configuration variables. Besides the inputs sets **102** and **103** the IED receive a third input set comprising control configuration values **108** that remain static while the values of input sets **102** and/or **103** change.

In some embodiments, an IED's performance can be measured to obtain data in response to a plurality of inputted triggers for a plurality of IED configurations **106** while a set of IED configuration values remain unchanged e.g., **108**. In some embodiments, an automated profiler can utilized the obtained performance data to calculate descriptive statistics comprising measures of location, for example, mean, median, quartile, and measures of spread, for example range, interquartile range, and standard deviation and the like descriptive statistics. Moreover, said automated profiler can also calculate inferential statistics including but not limited to probabilistic bounds (upper and lower bounds), mean's confidence interval, outlier detection, and the like inferential statistics. In some embodiments, the automated profiler can generate an Expected Performance IED Profile **104** based on said calculated descriptive and inferential statistics.

In some embodiments, an automated profiler can utilize the obtained performance data to perform a regression analysis to predict the outcome of an IED performance under untried stimuli triggers and/or configurations. In some embodiments, the automated profiler can be utilized one or more of multiple regressions, logistic regressions, stepwise regressions, generalized linear regressions, generalized linear mixed models and the like models and/or analysis. In some embodiments, the automated profiler can generate a Predicted Performance IED Profile **105** based on one or more regression analysis and/or models.

In some embodiments, an overall IED Performance Profile **101** comprises one or more of an Expected Performance IED Profile **104** and/or Predicted Performance IED Profile **105**. The overall IED Performance Profile can assert an IED performance under a plurality of tried and untried stimuli triggers and/or configurations.

FIGURE 2 shows exemplary use cases of the IED integrated design environment, in some embodiments of the IEDP. In some embodiments, a user **201** can launched an IED analyzer **203** utilizing the simulation station **202**. Thereafter, the IED analyzer performs an IED library display request **206** to an IED repository or database **208**. Consequently, in some embodiments, the IED repository or database **208** executes an IED library display response **207**. The IED library can comprise a set of IED profiles ordered by one or more categories for example IED model, IED maker and the like IED dependent categories **205**. Once the library is displayed on the simulation station **202**, the user **201** can select any number of IED profiles **204** from any of the available categories **205**.

In some embodiments, the user **201** can utilize the simulation station **202** to enter the analyzer integrated design environment **212**. Thereafter, the user **201** can arrange the selected IEDs to perform a substation automation system (SAS) function following standard topologies or custom-built designs configured with a plurality of selected input factors or configuration variable values **209**.

In some embodiments, the user **201** can utilize the simulation station **202** to enter the IED performance tracker **214**. Thereafter, the user **201** can perform a substation design or arrangement performance analysis request **213** to the IED analyzer. An example substation design or arrangement performance analysis request **213,** substantially in the form of an HTTP(S) POST message including XML-formatted data, is provided below:

```
POST /request_SD_performance_analysis.php HTTP/1.1

Host: www.IEDPServer.com

Content-Type: Application/XML
```

```
Content-Length: 667
<?XML version = "1.0" encoding = "UTF-8"?>
<performance_analysis_request>
   <timestamp>2040-12-12 15:22:43</timestamp>
   <user_name>John Doe</user_name>
   <user_credentials>
      <password>secretpass1234</password>
      <private_key>h767kwjiwnfe456#@hnniimidrtsxbi</private_key>
   </user_credentials>
   <!- applications may have types (i.e., web app, java, etc.) ->
   <IED_arrangement type="Design2.0">
      <function>redundant_bay_protection</function>
      <performance_metric value="response_time">
      <IED_elements number=4>
         <IED id="IED101">
            <model> IED XXXX</model>
            <output_port1 value="IED104">
            <GOOSE_Ctrl_Blocks level=4>
            <GOOSE_MSG level=23>
            <Output_State level=31>
         </IED>
         <IED id="IED102">
            <model> IED XXXX</model>
            <output_port1 value="IED104">
            <GOOSE_Ctrl_Blocks level=8>
            <GOOSE_MSG level=15>
            <Output_State level=16>
         </IED>
         <IED id="IED103">
            <model> IED XXXX</model>
            <output_port1 value="IED104">
            <GOOSE_Ctrl_Blocks level=4>
            <GOOSE_MSG level=7>
            <Output_State level=16>
         </IED>
         <IED id="IED104">
            <model>IED XXXX</model>
```

```
<input_port1 value="IED101">
<input_port2 value="IED102">
<input_port3 value="IED103">
<GOOSE_Ctrl_Blocks level=8>
<GOOSE_MSG level=31>
<Output_State level=31>
    </IED>
   </IED_elements>
  </IED_arrangment>
  <test_vectors>
   <low_level_com>MODBUS_val,103_val, 104_val,
101_val</low_level_com>
    <analog_values>CT_val, VT_val, LPVCLPCT_val, LPVT_val
</analog_values>
  <test_vectors>
</performance_analysis_request>
```

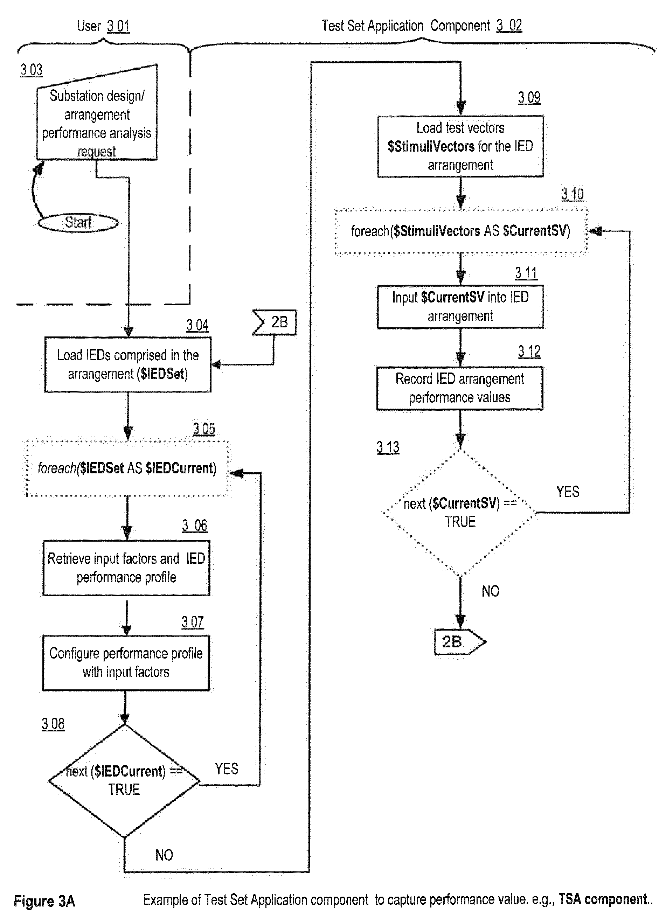

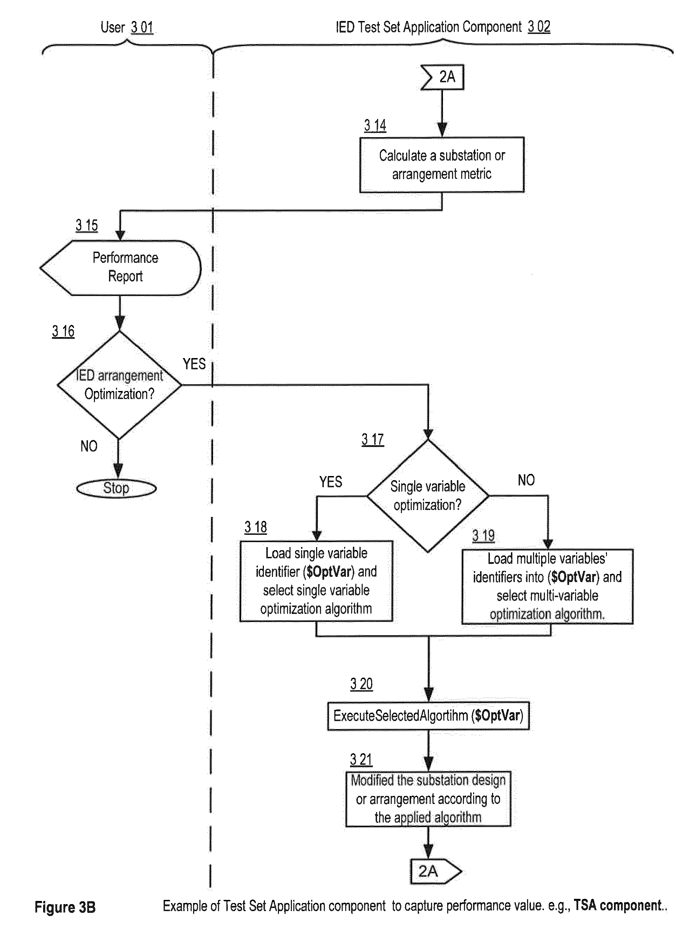

In some embodiments, the IED analyzer can apply a predetermined test set comprising a plurality of stimuli triggers to the IED arrangement **210**. The predetermined test set can be selected from a collection of test sets comprised in the IED analyzer or can be defined by the user. The test sets can be defined to replicate a spectrum of typical and/or atypical conditions on which the IED arrangement could be operating. The arrangement is then tested for each of the stimuli triggers, generating performance values (e.g., response time) for each of the stimulus triggers in the test set **211**. In some embodiments, a response time or reaction time of a system composed by two connected devices D1 and D2 can be defined as the time interval elapsed starting at the time when an external trigger causes a signal change in the device D1 up to the moment when the said changed signal, causes a second signal change on a second device for example D2. Further details regarding the application of the test set to the IED arrangement can be found with respect to FIGURES 3A-B, e.g., TSA Component 300.

FIGURES 3A-B show an example of Test Set Application Component to capture performance values e.g., a **TSA Component,** in one embodiment of the IEDP. In some embodiments, a user **301** can perform a substation design or arrangement performance analysis request **303**. Such a request may comprise information about the IED's interconnected in the arrangement, including but not limited to IED representation identifier, IED model, IED maker and the like IED information, the topology and/or substation function performed by the arrangement, a dataset comprising stimuli triggers, input factor and/or configuration values.

In some embodiments, the substation design performance analysis request is received by a Test Set Application (TSA) component **302** which can load the received IED information into a data structure e.g., *$IEDSet* **304.** In some embodiments the data structure pointed by the variable *$IEDSet* can be a linked list, an array of objects, a tree and the like data structures that can equally be employed to store, access and navigate through the substation design information. Thereafter, the IED test set application component can process each of the IEDs comprised in the substation design by temporarily storing each of the IED representations contained in the data structure *$IEDSet* into the local variable *$IEDCurrent* **305.**

In some embodiments, the IED Test Set Application (TSA) component retrieves one or more user indicated input factors associated with the current IED (i.e., *$IEDCurrent*) and an IED profile corresponding to the current IED representation identifier **306**. Example of the input factors include but are not limited to the number of IED interconnections, the IED identifiers of the IED connected to the current IED, the number of GoCBs, the number of GOOSE messages received by the IED at a random, same or substantially the same time as a stimulus trigger, the number of virtual output state changed after receiving a stimulus trigger, manufacture message specification report, web services, internal logic schemes, inputs from a human machine interface and/or the like IED configuration variables. Thereafter, the Test Set Application (TSA) component **302** configures the retrieved IED profile according to the retrieve input factors to match the user specifications **307**. Every time an IED profile is configured, the IED test set application component verifies if there are more unprocessed IEDs in the *$IEDSet* data structure remaining to be configured **308**. If there is more IED's in the data structure then steps **305, 306** and **307** are repeated for the subsequent IED in the *$IEDSet* until all the comprised IEDs are exhausted.

In some embodiments, after all the profiles included in the *$IEDSet* have been configured, the IED test set application component can load a plurality of test vectors into a data structure, e.g., *$StimuliVectors,* wherein each vector in the data structure can comprise one or more stimulus values to test the substation design or arrangement **309**. The data structure *$StimuliVectors* can be any data structure capable to hold a plurality of vectors containing stimulus values and/or other properties. Some example of such structures can be an array of objects, a matrix, objects comprising or using hash tables and the like data structures that can equally store vector values and facilitate the access of such values. Thereafter, the IED test set application component can process each of the stimulus vectors for which the user **301** wants to test the substation design by temporarily storing each of the stimulus vectors contained in the data structure *$StimuliVectors* into the local variable *$CurrentSV* **310**.

In some embodiments, the Test Set Application (TSA) component **302** inputs each stimulus vector e.g., *$CurrentSV* into the substation design or arrangement **311**, thereafter, a simulation is performed and a set of user determined performance values are recorded for each to the inputted values in the stimuli vectors **312**. Examples of performance values that can be recorded are overall arrangement performance time, a subset of IED's performance time, identification of the slowest and fastest IED component in the arrangement, identification of outliers performances and the like performance values. A person of ordinary skill in the art would recognize that many more performance metrics beyond metrics based on response time can also be observed and analyzed through the IED test set application component for example availability analysis for different SAS communication architectures, computing availability of different SAS protection functions and the like metrics. Moreover, IEC 61850 section 5 well defines performance requirements in terms of transfer time requirements for different substation functions that includes protection functions and different substation requirements. Apart from performance requirements, time synchronization performance requirements are also clearly defined in IEC 61850 section 5. Further, reliability and availability assessments of different types of SAS communication architectures and availability analysis of protection functions in a given SAS architecture are some other important metrics which can be evaluated through such an IED TSA component.

In some embodiments, after all the stimulus vectors included in the *$StimuliVectors* have been simulated and tested **313**, the Test Set Application (TSA) component **302** can proceed to process and analyze the recorded performance values to obtain performance metrics for example, overall substation design or arrangement response times **314**. Thereafter, the calculated metrics can be provided to the user **301** in a performance report **315**. Such a performance report may comprise textual information, graphs, charts, animations, pictures and the like media to convey information regarding the performance of the analyzed IED substation design or arrangement. In some embodiments, when the user **301** is satisfied with the current design and its performance, the user can decide to stop the process **316**, and a plurality of finalization steps (not shown in the drawing) can be performed for example, printing a report, saving the IED substation design into a history repository, and/or the like processing actions.

In some embodiments, the user **301** is provided with the option to optimize the IED substation design or arrangement **316** with respect to one or more performance metrics. In some embodiments, the user **301** can opt to optimize the design or arrangement with respect to a single performance metric or variable **317**. In such a case, the IED test set application component **302** can load a single variable **318** into the variable and/or array *$OptVar* and select a single variable optimization algorithm to be executed, for example, methods of bisection, Newton's method for root finding, secant method, golden section search, polynomial interpolation, line search techniques and the like algorithms, techniques and methods. In some embodiments, the user **301** can opt to optimize the design or arrangement with respect to more than one performance metric or variable **317**. In such a case, the IED test set application component can load a multiple variables' identifiers **319** into the variable and/or array *$OptVar* and select a multi-objective or multivariable optimization algorithm to be executed, for example, genetic algorithms for multivariable analysis or evolutionary optimization methods, Hooke-Jeeves pattern search, Powell's conjugate direction method, weighted sum method, constraint method, Benson's method and the like multivariable and/or multi-objective optimization methods. In an alternative embodiment, instead of selecting a specific optimization algorithm, the IED test set application component **302** can prompt the user **301** to select an optimization algorithm form a library of computer executable programs comprising single and multi-variable optimization algorithms.

Thereafter, the IED test set application component **302** can execute the selected algorithm utilizing the variable *$OptVar* **320** as a parameter and subsequently the substation design or arrangement can be modified according to the results of the applied algorithm **321**. The modifications that can be made to an IED substation design or arrangement as part of the optimization process include but are not limited to adding or deleting IEDs from the arrangement, changing an IED model, changing one or more IED configuration values, changing the way one or more IEDs are interconnected in the design and the like actions. Once the corresponding modifications have been applied to the IED substation design or arrangement the testing process can start all over again from the step **304.**

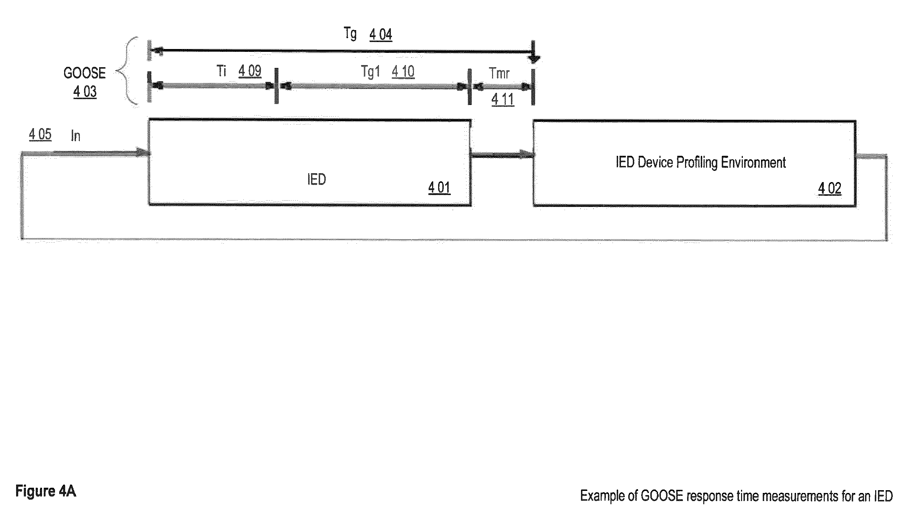

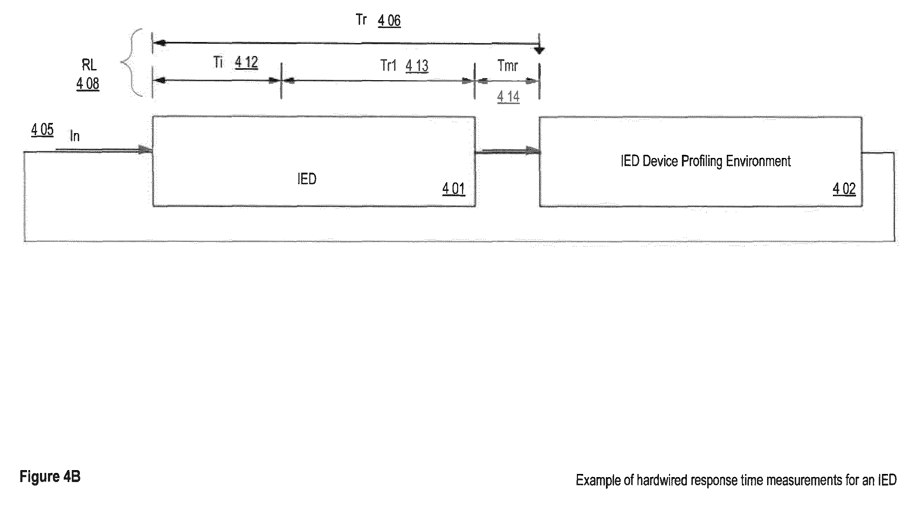

FIGURE 4A-B show an example of GOOSE and hardwired response time measurements for an IED, in one embodiment of the IEDP. In some embodiments, the GOOSE and hardwired response times of an IED **401** are measured as a response form an input signal **405** sent by an IED device profiling environment **402**. The input signal **405** can trigger not only a relay trip but also a GOOSE message with at least one Virtual Output state change. The IED device profiling environment **402** can receive both kinds of output signals e.g., **403** shown in Figure 4A and **408** shown in figure 4B. The time for the GOOSE and hardwire responses can be calculated by processing different time sections between the input signal **405** and the arrival of an output signal e.g., **403** and **408**.

Figure 4A shows some examples of time sections related to GOOSE messages response time **403** that can be measured for the IED **401**. Some examples of such time sections include but are not limited to *Tg* **404** which corresponds to the time between the emitted input signal **405** and the received Virtual Output (VOP) state change GOOSE message **403**; *Ti* **409** which corresponds to the time between the emitted input signal **405** and the time taken by the IED **401** to logically evaluate the inputted signal; *Tg1* **410** which corresponds to the time taken by the IED's main processor to send out a VOP state change through the IED Ethernet card; and *Tmr* **411** which corresponds to the common time consumption for the GOOSE message/hardwired **403** to be transferred over a network and received by the IED device profiling environment **402**. Additionally a GOOSE message response time can also be calculated by for example adding two or more of the aforementioned time metrics.

Figure 4B shows some examples of time sections related to hardwire response time **408** that can be measured for the IED **401**. Some examples of such time sections include but are not limited to *Tr* **406** which corresponds to the time between the emitted input signal **405** and the received IED contact output state change and/or hardware response **408;** *Ti* **412** which corresponds to the time between the emitted input signal **405** and the time taken by the IED **401** to logically evaluate the inputted signal; *Tr1* **413** which corresponds to the time taken by the IED's main processor to send a contact output trip state change and a contact output tripped signal to the IED device profiling environment **402**; and *Tmr* **414** which corresponds to the time consumption for the hardwire response, output trip state change and/or a contact output tripped signal, **408** to be transferred over a network and received by the IED device profiling environment **402**. Additionally hardwire response times can also be calculated by for example adding two or more of the aforementioned time metrics.

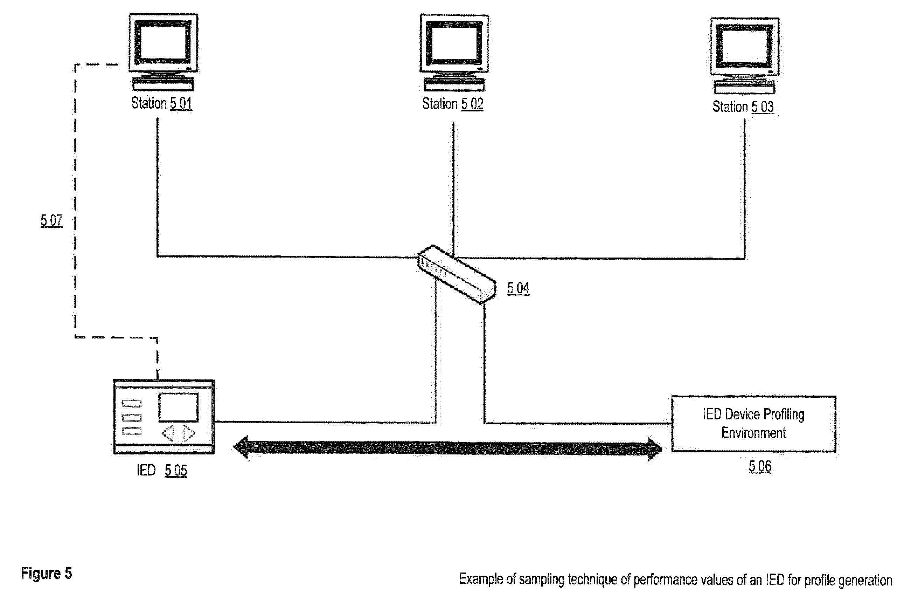

FIGURE 5 shows an example of sampling technique of performance values of an IED for profile generation, in one embodiment of the IEDP. In some embodiments of the IEDP, the data utilized to generate IED profiles can be collected from an IEC 61850 device performance platform environment comprising an IED **505** subjected to a set of experiment procedures designed to measure a performance metric over a range of stress conditions. For example the response time performance of an IED including but not limited to GOOSE response from the IED and/or wired relay output.

In some embodiments, the IED can receive a set of input factors and/or configuration values from the computer station **501** through a serial connection **507** and/or from an Ethernet connection **504** additionally or alternatively the IED **505** can also receive input factors and/or configuration values though the computer station **502**. In some embodiments, the performance metrics, for example the response time performance of an IED can be observed and analyzed through a computer station **503** running a sniffer program targeting packets of data transmitted over a network for example Wireshark, Tcdump, Ettercap and the like packet sniffers. In some embodiments, an IED device profiling environment **506** can emit a plurality of IED triggers including but not limited to GOOSE triggers, fault current triggers, opto triggers, 61850 stress stimuli, sample measurement values and the like triggers.

Table 1 provides an example of input factors or configuration values that can be applied to the IED to obtain sample data corresponding to each test case for an IED profile generation. In some embodiments, the sample data can be statistically examined to obtain key insights of a performance metric of the IED when subjected to the varying input factors and/or stress conditions comprised in the testing scenarios.

In some embodiments, two or more inferential statistics can be used to generate and IED profile. For example, in some embodiments the sample data can be used to calculate probabilistic bound on an IED response time variable and/or a confidence interval of an IED mean response time variable.

TABLE I

EXAMPLE OF IED TESTING INPUT FACTORS

| Input Factor | Example of Variations |
|---|---|
| Number of GOOSE control blocks configured | 3 levels - e.g. 1, 4, 8 |
| Number of GOOSE messages received by the IED at a random time, at the same time and/or substantially at the same time | 5 levels - e.g. 0, 7, 15, 23, 31 |
| Number of output state change by an IED to the received trigger permeability | 3 levels - e.g. 1, 16, 31 |

For example, the probabilistic bounds on a response time variable for a normally distributed data sample can be obtained as follow; let x be the response time for a testing scenario, then,

$$Prob(\mu - 3\sigma \leq x \leq \mu + 3\sigma) \approx 0.9987 \qquad (1)$$

For large samples, $\mu$ and $\sigma$ can be replaced by their corresponding estimates i.e., $\bar{x}$ and s respectively in (1). For example, for a scenario with sample mean $\bar{x}$ = 10.82 *ms and sample standard deviation s* = 1.52 *ms*, it is expected that 99.87% of times the response time of the IED device will not exceed (10.82 + 1.52*3) 15.38 ms.

Moreover, the confidence interval of an IED mean response time variable can also be calculated. Wherein a $(1-\alpha)100\%$ confidence interval for mean response time $\mu$ is an interval constructed from sample wherein the upper and lower limits of this confidence interval are given by:

$$\bar{x} \pm t_{1-\alpha/2, n-1} \frac{s}{\sqrt{n}} \qquad (2)$$

TABLE 2

TIME MEASUREMENTS *TG* FOR A GOOSE MESSAGE RESPONSE

| Test Case 1121 | Value |
|---|---|
| Min(ms) | 2.1 |
| Max(ms) | 4.4 |
| Mean(ms) | 3.14 |
| Std. Error | 0.05 |
| Std. Deviation | 0.70 |
| Variance | 0.49 |
| 99.5% Confidence Limit on Mean (ms) | 3.28 |
| 99.87% Upper probability bound | 5.25 |

Where $t_{1-\alpha/2}$, n - 1 is the 100(1- $\alpha$) percentile of the t -distribution with n - 1 degrees of freedom. E.g. 99% confidence interval computes to:

$$\bar{x} \pm 2.58 * \frac{s}{\sqrt{n}} \qquad (3)$$

The upper probabilistic bounds on the response time values and the confidence intervals on the mean response time values for a plurality of measurements including but not limited to *Tg, Ti, Tg1, Tmr, Tr, Tr1* and the like measurements can be calculated as described in this application. A typical table for the measurement *Tg* when for a GOOSE message response time is provided in Table 2.

In some embodiments, a regression analysis can be performed to build a mathematical model to provide a relationship between a response time variable *Y* (in ms) under study and a chosen independent control variable or factor *Xi*. Such a model can be used to estimate the mean response for a given set of levels of a control variable in the range of levels provided by the data used to perform the regression analysis. For example, linear least square regression can fit the data with any function of the form:

$$Y = f(\vec{X}; \vec{\beta}) = \beta_0 + \beta_1 X_1 + \beta_2 X_2 + \cdots + \beta_k X_k + \varepsilon \qquad (4)$$

Where the coefficients $\beta 0, \beta 1, \beta 2, ..., \beta k$ are the estimates for the data, $\varepsilon$ is noise (an uncontrolled error variable) having a normal distribution with mean zero and a constant variance (homoscedasticity). Non linearity in the model can be introduced by replacing *Y* by a suitable transformation on *Y*.

A statistical software package for example SPSS v16.o can be used to process all the sampled data and estimate the model coefficients. Including but not limited to the following calculations:

*Goodness of fit, $R^2$*: Defined as the ratio of explained variance by the fitted model to the total variance in the experimental data. Variance of a data $y_i$ is defined as the square of the deviation of this value from the observed mean of the data sample. The analysis can be stopped at the point when the *Goodness of fit $R^2$* (total variance explained by the proposed model to the total variance in the observed samples) is high enough and the error variance appeared constant. The scope to refine the proposed model can be considered infinite and is only constrained by business decisions to pause the refinement process.

*Residual plots:* Residual plots provide quick visual aid to understand the behavior of residual distribution. For a good fit, the residual distribution can be random in pattern and the variance in errors can be constant. However, if the residual distributions follow any particular pattern, i.e. is heteroskedastic - has bulges, or "fanning out" - variance stabilizing techniques can be employed such as power transformation on the response variable, input variable scaling, weighted least square estimates to provide stability to the residuals and the like techniques. In some cases it may be useful to apply some variance stabilizing techniques to smoothen out bulges and bring the variance constant.

*Normality plots (P-P plots):* Normality plots can provide a visual aid to check for normality of the residual errors. If the residual errors are normally distributed, they would lie on a diagonal line.

*Significance of each explanatory variable* on describing the model and which variable(s) have the most significant impact on the response variable.

An example of a regression model for a time measurement $Tg$ for a particular IED device is provided below:

$$IED\ Device\ 1: \hat{T}_{g|Trigger=GOOSE} = (1.610 + 0.011X1 + 0.045X2 + 0.241X3)^2 \qquad (5)$$

In this case, the $R^2$ for IED Device 1 is 0.984 which means 98.4% of variation in the sample data for all scenarios is captured in this model. The Residual scatter is random which can be interpreted as not being a good fit. Normality plot showing for example a diagonal line in the form of a positive correlation can be considered good which meaning that the errors are random in nature.

The obtained regression model can be validated by for example, taking some set of scenarios which were not used for estimating the linear regression of the IED device. Hence, the chosen scenarios can be utilized to determine the percentage error in the prediction capability of the model obtained from the regression analysis.

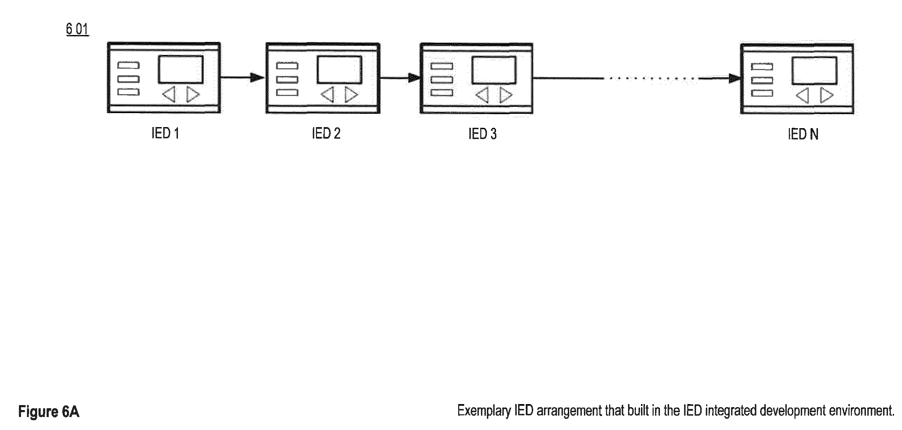

FIGURE 6 A-C show exemplary IED arrangements built in the IED integrated development environment, in one embodiment of the IEDP. In some embodiments, all the IED devices in a substation design or arrangement can operate independently and their response times are normally distributed. In some embodiments, each device can have different mean response time and different variance depending on the received stimuli or stress conditions the device is subjected to. In some embodiments, it can be assumed that $E(R_i) = \mu$ and $V(R_i) = \sigma_i^2, i = 1,2,3, ...., n$ where $(R_i)$ is a random variable representing the response time of the $i^{th}$ device. In some embodiments, the collected data for each of the IED device can be used to calculate estimates of mean $\mu$ and the variance $\sigma_i^2$ of response time for different scenarios comprised in the collected data. For scenarios that are not comprised in the collected data a regression modeling can provide an estimate or prediction of the response time and the variance. The IED substation designs or arrangements presented below are representative of the manner in which devices are actually arrange in a SAS function to for example protect a substation or part of it. As shown below, in some embodiments, different mathematical formulations can apply to different types of system designs.

Figure 6A shows an IED substation design or arrangement that can be configured in some embodiments of the IED integrated development environment. The IED substation design or arrangement **601** corresponds to a plurality of IEDs connected in a series wherein each IED device can independently process inputs based on the stress condition it is under and forwards the processed inputs to the next device. Such an IED substation design or arrangement can be utilized to prevent or mitigate a circuit breaker failure (CBF), and/or to provide arc protection, blocking based bus bar protection and the like SAS functions. In some embodiments, the overall reaction or response time of the IED substation design or arrangement **601,** can be mathematically represented by:

$$R_{overall} = R_1 + R_2 + .. + R_n \qquad (6)$$

For the system shown in Figure 6A, mean and variance bounds on the response time are given by:

$$\mu_{overall} = \mu_1 + \mu_2 \qquad (7)$$

$$\sigma_{overall}^2 = \sigma_1^2 + \sigma_2^2 \qquad (8)$$

If $\mu_i$ is estimated by $\overline{R}_\tau$ and $\sigma_i^2$ is estimated by $s_i^2$ (the sample variance from large sample of 'n' observations), then the 100(1-α)% Confidence Interval of $\mu_{overall}$ is given by:

$$\mu_{overall} \approx \overline{R_1} + \overline{R_2} \pm z_{\alpha/2}\sqrt{\frac{s_1^2}{n_1} + \frac{s_2^2}{n_2}} \qquad (9)$$

Where $z_{\alpha/2}$ is the α x 100% upper percentile of the standard normal distribution. For 99% confidence interval, the value of $z_{\alpha/2}$ is 2.58.

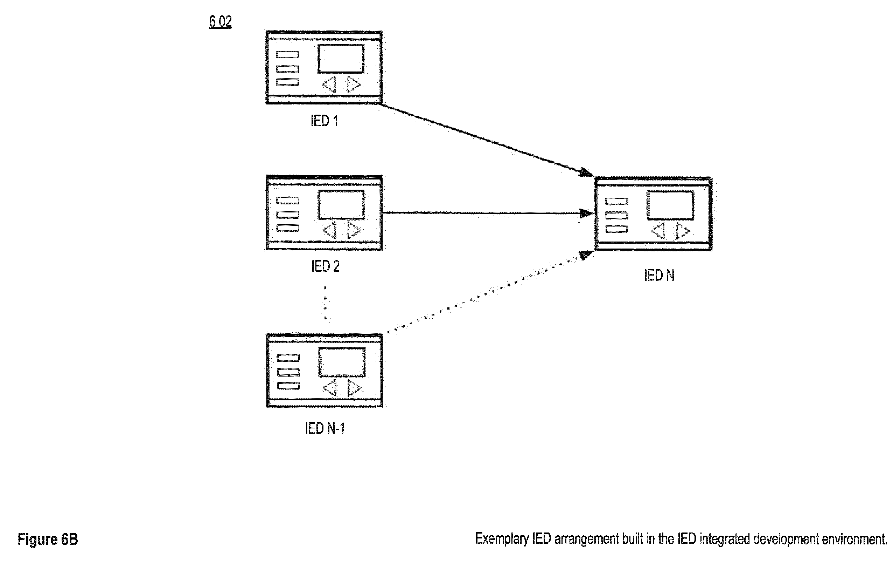

Figure 6B shows an IED substation design or arrangement that can be configured in some embodiments of the IED integrated development environment. The IED substation design or arrangement **602** corresponds to plurality of connected IEDs wherein at least two IED devices independently process messages and send them to a third device, which process the receive messages on a first in first served basis. Such an IED substation design or arrangement can be utilized to provide redundant protection for substation bays and/or to provide reverse blocking schemes. In some embodiments, the overall reaction or response time of the IED substation design or arrangement **602,** can be mathematically represented by:

$$R_{overall} = \min(R_1, R_2, .., R_{N-1}) + R_N \qquad (10)$$

For example, if we consider N = 3 so that it reduces to a 3 IED device system where 2 devices are competing to send an information to the 3rd device which takes action on the earliest received information from any of the 2 devices, the mathematical problem involved is to find the mean and variance of: min(R1,R2) + R3. Let,

$$\phi(z) = \int_{-\infty}^{z} \frac{1}{\sqrt{2\pi}} e^{\frac{-1}{2}z^2} dz \qquad (11)$$

$$\varphi(z) = \frac{d(\phi(z))}{dz} = \frac{1}{\sqrt{2\pi}} e^{\frac{-1}{2}z^2} \qquad (12)$$

$$v = \frac{\mu_2 - \mu_1}{\sqrt{\sigma_1^2 + \sigma_2^2}} \qquad (13)$$

Then the following statistics can be calculated:

$$\mu_{min} = E(\min(R_1, R_2)) = \mu_1\phi(v) + \mu_2\phi(-v) - \sqrt{\sigma_1^2 + \sigma_2^2}\,\varphi(v) \qquad (14)$$

$$\mu'_{min} = E[(\min(R_1, R_2))^2] = (\mu_1^2 + \sigma_1^2)\phi(v) + (\mu_2^2 + \sigma_2^2)\phi(-v) - (\mu_1 + \mu_2)\sqrt{\sigma_1^2 + \sigma_2^2}\,\varphi(v) \qquad (15)$$

$$\sigma_{min}^2 = V(\min(R_1, R_2)) = \mu'_{min} - \mu_{min}^2 \qquad (16)$$

It follows that the following bounds on the mean and variance can be determined for a system like the one shown in Figure 6B.

$$\mu_{overall} = E(\min(R_1, R_2) + R_3) = \mu_{min} + \mu_3 \qquad (17)$$

$$\sigma_{overall}^2 = V(\min(R_1, R_2) + R_3) = \sigma_{min}^2 + \sigma_3^2 \qquad (18)$$

Where, the moment estimators for $\mu_{min}$ and $\sigma^2_{min}$ can be obtained by plugging in the $\overline{R}_\tau$ and $s^2_i$ for $\mu_i$ and $\sigma^2_i$ respectively. These are also the maximum likelihood estimators if the normal distribution is assumed.

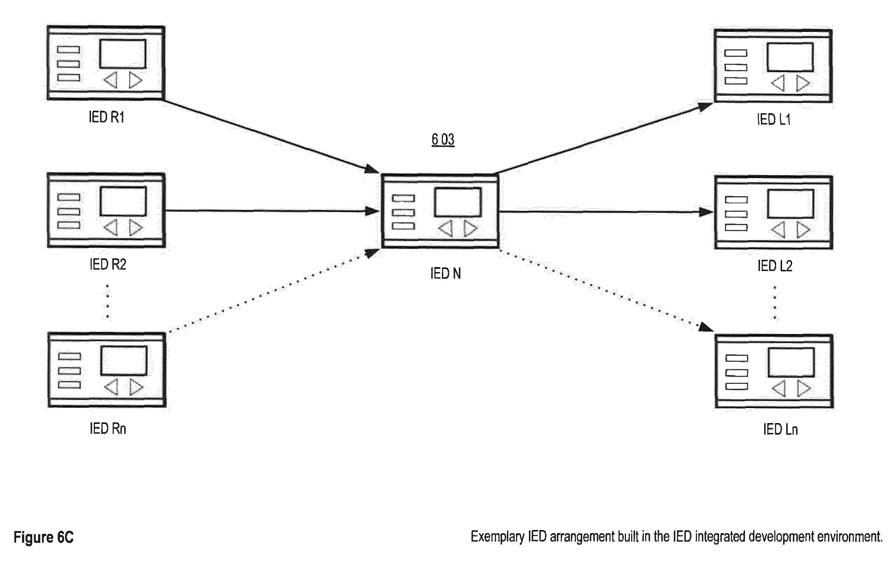

Figure 6C shows an IED substation design or arrangement that can be configured in some embodiments of the IED integrated development environment. The IED substation design or arrangement **603** corresponds to a plurality of IEDs interconnected wherein the design or arrangement comprises at least two or more competing intelligent electronic devices connected to an intermediate intelligent electronic device, and the intermediate intelligent electronic device is connected to two or more receiver intelligent electronic devices. Such an IED substation design or arrangement can be utilized to provide for example a SAS first load shedding scheme and the like SAS functions. In some embodiments, the overall reaction or response time of the IED substation design or arrangement **603**, can be mathematically represented by:

$$R_{overall} = [\max(L_i)_{i=1,2,3\ldots,k} + R_c + \max(R_i)_{i=1,2,3\ldots,l}] \tag{19}$$

Let there be K devices on the left side of the controller ($L_i$) which can provide measurement information to the load shedding controller to enable it to take corrective actions in case of network contingencies. Let there be L devices on the right side of the controller ($R_i$) which shall receive the load shed requirement from the controller to trip their respective loads. Let $Rc$ be the average response time of the load shedding controller. In such scenario the total worst case overall response time shall be represented by:

$$R_{overall\_worst} = [\max(L_i)_{i=1,2,3\ldots,k} + R_c + \max(R_i)_{i=1,2,3\ldots,l}] \tag{20}$$

It follows that:

$$E[\max(L_i)_{i=1,2,3\ldots,k}] = -E[\min(-L_i)_{i=1,2,3\ldots,k}] \tag{21}$$

$$E[-L_i] = -E[L_i] \quad, \quad V[-L_i] = V[L_i] \tag{22}$$

Similar holds for $E[-R_i]$ as well. The following set of equations can be used to estimate the mean response time and variance for the group of devices to the left and right of the central controller.

$$\mu_{max} = E(\max(R_1, R_2)) = \mu_1\phi(-v) + \mu_2\phi(v) + \sqrt{\sigma_1^2 + \sigma_2^2}\,\varphi(v) \tag{23}$$

$$\mu'_{max} = E[(\max(R_1, R_2))^2] = (\mu_1^2 + \sigma_1^2)\phi(-v) + (\mu_2^2 + \sigma_2^2)\phi(v) + (\mu_1 + \mu_2)\sqrt{\sigma_1^2 + \sigma_2^2}\,\varphi(v) \tag{24}$$

$$\sigma^2_{max} = V(\max(R_1, R_2)) = \mu'_{max} - \mu_{max}^2 \tag{25}$$

Therefore we can calculate the following bounds on the mean and variance of a system like the own shown in Figure 6C.

$$\mu_{overall\_worst} = \mu_{\max\_L_i} + \mu_c + \mu_{\max\_R_i} \tag{26}$$

$$\sigma^2_{overall\_worst} = \sigma^2_{\max\_L_i} + \sigma^2_c + \sigma^2_{\max\_R_i} \tag{27}$$

A person of ordinary skill in the art would recognize that the aforementioned substation designs or arrangements are only a subset of the many alternative designs or arrangements that can be implemented for a plurality of SAS functions employing the disclosed IED integrated development environment.

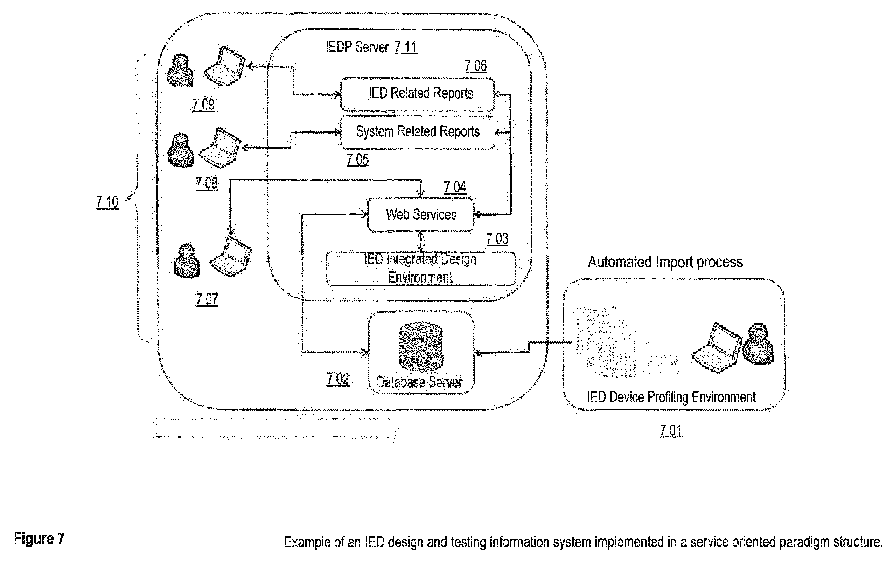

FIGURE 7 shows an example of an IED design and testing information system implemented in a service oriented paradigm structure, in one embodiment of the IEDP. In some embodiment, the IEDP transforms a plurality of statistical models into information through a service oriented server **711** capable to produce simultaneous, on-demand access to a plurality of users **710**. Such users can access the IEDP system remotely or locally from a web based application, a client based application or any other platform that can give them access to the server's engine.

In some embodiments the IEDP system implements an automated process to collect and store statistical data derived from a test workbench produced in an IED Device Profiling Environment **701**. Thereafter, the collected data is organized and tagged with information including but not limited to the test case ID, firmware ID, configuration values and infrastructure configuration. Thereafter, once the collected data has been tagged one or more IED profiles can be built and it can be stored in a repository for example a database server **702.**

In one embodiment, a user enabled by a computer station **707** can have access to the IEDP web service **704,** to intuitively and dynamically create a substation design or arrangement through the IED Integrated Design Environment **703** utilizing a plurality of IED profiles stored in the database server **702**. Thereafter the design and simulation process can continue in a similar way as it has been described with respect to Figure 2 in this document.

In another embodiment, a user enabled by a computer station **708** can similarly access the IEDP system to request system related reports **705**. The IEDP system is capable to generate a plurality of system related reports including but not limited to system performance reports to provide estimates of the overall response time performance of a system design chosen by an end user. Such a report, can include user's selection of IEDs used in system performance estimation, similarly it can indicate what stress conditions are specified on each of the selected IEDs, type of arrangement of IEDs in a particular system design (type of system design) among other features.

In a further embodiment, a user enabled by a computer station **709** can similarly access the IEDP system to request IED related reports **706.** The IEDP system is capable to generate a plurality of IED related reports including but not limited to IED performance reports to provide the performance profile of an IED by subjecting the IED to a wide range of stress conditions which are configured by batch of experiment cases. Such performance reports can detail out the methodology followed for measuring response time performance, different statistical measures in tabulated form, graphical visualization of response time performance, histogram analysis of performance data, expert comments on different performance scenarios, and the like IED related information.

**IEDP Controller**

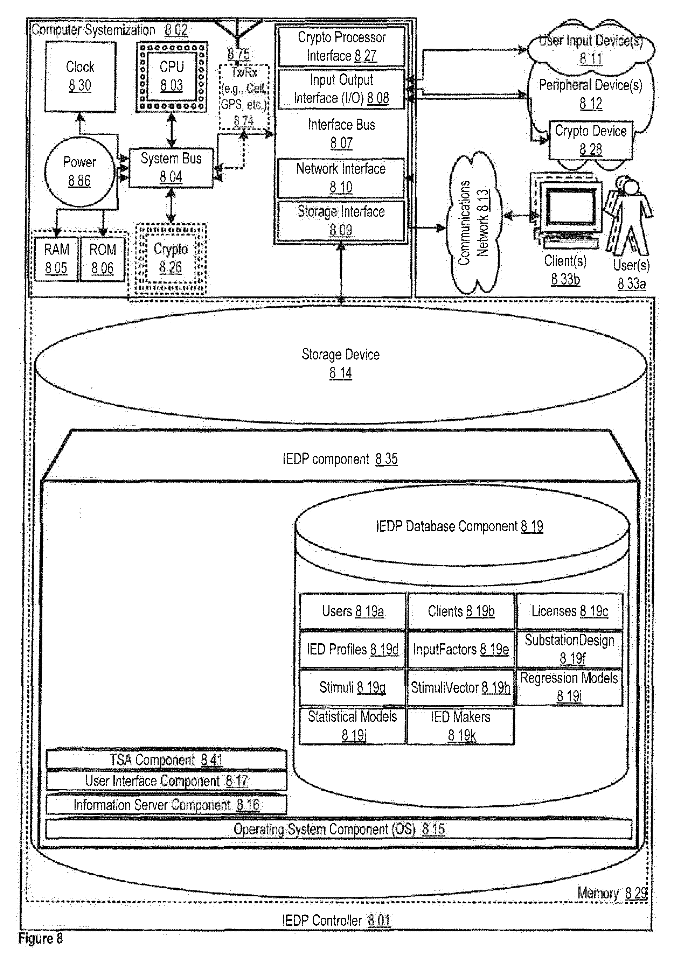

FIGURE 8 shows a block diagram illustrating embodiments of a IEDP controller. In this embodiment, the IEDP controller 801 may serve to aggregate, process, store, search, serve, identify, instruct, generate, match, and/or facilitate interactions with a computer through various technologies, and/or other related data. The IEDP can, for example, be configured such that the various components described herein execute on computer stations **707, 708** and **709,** an IEDP server **711** and an IED Device Profiling Environment **701.** Because each component of the IEDP may be distributed, as described below, the computer stations **707, 708** and **709,** the IEDP server **711** and the IED Device Profiling Environment **701** may perform portions of the program logic assigned to them or portions of the program logic normally assigned to the other. In another example, the Test Set Application (TSA) component **302** (described above with respect to Figures 3A-B) can execute on IEDP server **711** as shown. In an alternative configuration, the Test Set Application (TSA) component **302** may be installed on the computer stations **707, 708** and **709** or the IED Device Profiling Environment **701** and provide services capabilities as described below.

Typically, users, which may be people and/or other systems, may engage information technology systems (e.g., computers) to facilitate information processing. In turn, computers employ processors to process information; such processors **803** may be referred to as central processing units (CPU). One form of processor is referred to as a microprocessor. CPUs use communicative circuits to pass binary encoded signals acting as instructions to enable various operations. These instructions may be operational and/or data instructions containing and/or referencing other instructions and data in various processor accessible and operable areas of memory **829** (e.g., registers, cache memory, random access memory, etc.). Such communicative instructions may be stored and/or transmitted in batches (e.g., batches of instructions) as programs and/or data components to facilitate desired operations. These stored instruction codes, e.g., programs, may engage the CPU circuit components and other motherboard and/or system components to perform desired operations. One type of program is a computer operating system, which, may be executed by CPU on a computer; the operating system enables and facilitates users to access and operate computer information technology and resources. Some resources that may be employed in information technology systems include: input and output mechanisms through which data may pass into and out of a computer; memory storage into which data may be saved; and processors by which information may be processed. These information technology systems may be used to collect data for later retrieval, analysis, and manipulation, which may be facilitated through a database program. These information technology systems provide interfaces that allow users to access and operate various system components.

In one embodiment, the IEDP controller **801** may be connected to and/or communicate with entities such as, but not limited to: one or more users from user input devices **811**; peripheral devices **812;** an optional cryptographic processor device 828; and/or a communications network **813**.

Networks are commonly thought to comprise the interconnection and interoperation of clients, servers, and intermediary nodes in a graph topology. It should be noted that the term "server" as used throughout this application refers generally to a computer, other device, program, or combination thereof that processes and responds to the requests of remote users across a communications network. Servers serve their information to requesting "clients." The term "client" as used herein refers generally to a computer, program, other device, user and/or combination thereof that is capable of processing and making requests and obtaining and processing any responses from servers across a communications network. A computer, other device, program, or combination thereof that facilitates, processes information and requests, and/or furthers the passage of information from a source user to a destination user is commonly referred to as a "node." Networks are generally thought to facilitate the transfer of information from source points to destinations. A node specifically tasked with furthering the passage of information from a source to a destination is commonly called a "router." There are many forms of networks such as Local Area Networks (LANs), Pico networks, Wide Area Networks (WANs), Wireless Networks (WLANs), etc. For example, the Internet is generally accepted as being an interconnection of a multitude of networks whereby remote clients and servers may access and interoperate with one another.

The IEDP controller **801** may be based on computer systems that may comprise, but are not limited to, components such as: a computer systemization 802 connected to memory **829**.

## Computer Systemization

A computer systemization **802** may comprise a clock **830**, central processing unit ("CPU(s)" and/or "processor(s)" (these terms are used interchangeable throughout the disclosure unless noted to the contrary)) **803**, a memory **829** (e.g., a read only memory (ROM) **806**, a random access memory (RAM) **805**, etc.), and/or an interface bus **807**, and most frequently, although not necessarily, are all interconnected and/or communicating through a system bus **804** on one or more (mother)board(s) **802** having conductive and/or otherwise transportive circuit pathways through which instructions (e.g., binary encoded signals) may travel to effectuate communications, operations, storage, etc. The computer systemization may be connected to a power source **886**; e.g., optionally the power source may be internal. Optionally, a cryptographic processor **826** and/or transceivers (e.g., ICs) **874** may be connected to the system bus. In another embodiment, the cryptographic processor and/or transceivers may be connected as either internal and/or external peripheral devices **812** via the interface bus I/O. In turn, the transceivers may be connected to antenna(s) **875**, thereby effectuating wireless transmission and reception of various communication and/or sensor protocols; for example the antenna(s) may connect to: a Texas Instruments WiLink WL1283 transceiver chip (e.g., providing 802.11n, Bluetooth 3.0, FM, global positioning system (GPS) (thereby allowing IEDP controller to determine its location)); Broadcom BCM4329FKUBG transceiver chip (e.g., providing 802.11n, Bluetooth 2.1 + EDR, FM, etc.); a Broadcom BCM4750IUB8 receiver chip (e.g., GPS); an Infineon Technologies X-Gold 618-PMB9800 (e.g., providing 2G/3G HSDPA/HSUPA communications); and/or the like. The system clock typically has a crystal oscillator and generates a base signal through the computer systemization's circuit pathways. The clock is typically coupled to the system bus and various clock multipliers that will increase or decrease the base operating frequency for other components interconnected in the computer systemization. The clock and various components in a computer systemization drive signals embodying information throughout the system. Such transmission and reception of instructions embodying information throughout a computer systemization may be commonly referred to as communications. These communicative instructions may further be transmitted, received, and the cause of return and/or reply communications beyond the instant computer systemization to: communications networks, input devices, other computer systemizations, peripheral devices, and/or the like. It should be understood that in alternative embodiments, any of the above components may be connected directly to one another, connected to the CPU, and/or organized in numerous variations employed as exemplified by various computer systems.

The CPU comprises at least one high-speed data processor adequate to execute program components for executing user and/or system-generated requests. Often, the processors themselves will incorporate various specialized processing units, such as, but not limited to: integrated system (bus) controllers, memory management control units, floating point units, and even specialized processing sub-units like graphics processing units, digital signal processing units, and/or the like. Additionally, processors may include internal fast access addressable memory, and be capable of mapping and addressing memory **829** beyond the processor itself; internal memory may include, but is not limited to: fast registers, various levels of cache memory (e.g., level 1, 2, 3, etc.), RAM, etc. The processor may access this memory through the use of a memory address space that is accessible via instruction address, which the processor can construct and decode allowing it to access a circuit path to a specific memory address space having a memory state. The CPU may be a microprocessor such as: AMD's Athlon, Duron and/or Opteron; ARM's application, embedded and secure processors; IBM and/or Motorola's DragonBall and PowerPC; IBM's and Sony's Cell processor; Intel's Celeron, Core (2) Duo, Itanium, Pentium, Xeon, and/or XScale; and/or the like processor(s). The CPU interacts with memory through instruction passing through conductive and/or transportive conduits (e.g., (printed) electronic and/or optic circuits) to execute stored instructions (i.e., program code) according to conventional data processing techniques. Such instruction passing facilitates communication within the IEDP controller and beyond through various interfaces. Should processing requirements dictate a greater amount speed and/or capacity, distributed processors (e.g., Distributed IEDP), mainframe, multi-core, parallel, and/or super-computer architectures may similarly be employed. Alternatively, should deployment requirements dictate greater portability, smaller Personal Digital Assistants (PDAs) may be employed.

Depending on the particular implementation, features of the IEDP may be achieved by implementing a microcontroller such as CAST's R8051XC2 microcontroller; Intel's MCS 51 (i.e., 8051 microcontroller); and/or the like. Also, to implement certain features of the IEDP, some feature implementations may rely on embedded components, such as: Application-Specific Integrated Circuit ("ASIC"), Digital Signal Processing ("DSP"), Field Programmable Gate Array ("FPGA"), and/or the like embedded technology. For example, any of the IEDP component collection (distributed or otherwise) and/or features may be implemented via the microprocessor and/or via embedded components; e.g., via ASIC, coprocessor, DSP, FPGA, and/or the like. Alternately, some implementations of the IEDP may be implemented with embedded components that are configured and used to achieve a variety of features or signal processing.

Depending on the particular implementation, the embedded components may include software solutions, hardware solutions, and/or some combination of both hardware/software solutions. For example, IEDP features discussed herein may be achieved through implementing FPGAs, which are a semiconductor devices containing programmable logic components called "logic blocks", and programmable interconnects, such as the high performance FPGA Virtex series and/or the low cost Spartan series manufactured by Xilinx. Logic blocks and interconnects can be programmed by the customer or designer, after the FPGA is manufactured, to implement any of the IEDP features. A hierarchy of programmable interconnects allow logic blocks to be interconnected as needed by the IEDP system designer/administrator, somewhat like a one-chip programmable breadboard. An FPGA's logic blocks can be programmed to perform the operation of basic logic gates such as AND, and XOR, or more complex combinational operators such as decoders or mathematical operations. In most FPGAs, the logic blocks also include memory elements, which may be circuit flip-flops or more complete blocks of memory. In some circumstances, the IEDP may be developed on regular FPGAs and then migrated into a fixed version that more resembles ASIC implementations. Alternate or coordinating implementations may migrate IEDP controller features to a final ASIC instead of or in addition to FPGAs. Depending on the implementation all of the aforementioned embedded components and microprocessors may be considered the "CPU" and/or "processor" for the IEDP.

### Power Source

The power source **886** may be of any standard form for powering small electronic circuit board devices such as the following power cells: alkaline, lithium hydride, lithium ion, lithium polymer, nickel cadmium, solar cells, and/or the like. Other types of AC or DC power sources may be used as well. In the case of solar cells, in one embodiment, the case provides an aperture through which the solar cell may capture photonic energy. The power cell **886** is connected to at least one of the interconnected subsequent components of the IEDP thereby providing an electric current to all subsequent components. In one example, the power source **886** is connected to the system bus component **804.** In an alternative embodiment, an outside power source **886** is provided through a connection across the I/O **808** interface. For example, a USB and/or IEEE 1394 connection carries both data and power across the connection and is therefore a suitable source of power.

### Interface Adapters

Interface bus(ses) **807** may accept, connect, and/or communicate to a number of interface adapters, conventionally although not necessarily in the form of adapter cards, such as but not limited to: input output interfaces (I/O) **808**, storage interfaces **809**, network interfaces **810,** and/or the like. Optionally, cryptographic processor interfaces **827** similarly may be connected to the interface bus. The interface bus provides for the communications of interface adapters with one another as well as with other components of the computer systemization. Interface adapters are adapted for a compatible interface bus. Interface adapters conventionally connect to the interface bus via a slot architecture. Conventional slot architectures may be employed, such as, but not limited to: Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and/or the like.

Storage interfaces **809** may accept, communicate, and/or connect to a number of storage devices such as, but not limited to: storage devices **814**, removable disc devices, and/or the like. Storage interfaces may employ connection protocols such as, but not limited to: (Ultra) (Serial) Advanced Technology Attachment (Packet Interface) ((Ultra) (Serial) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces **810** may accept, communicate, and/or connect to a communications network **813**. Through a communications network **813**, the IEDP controller is accessible through remote clients **833b** (e.g., computers with web browsers) by users **833a.** Network interfaces may employ connection protocols such as, but not limited to: direct connect, Ethernet (thick, thin, twisted pair 10/100/1000 Base T, and/or the like), Token Ring, wireless connection such as IEEE 802.11a-x, and/or the like. Should processing requirements dictate a greater amount speed and/or capacity, distributed network controllers (e.g., Distributed IEDP), architectures may similarly be employed to pool, load balance, and/or otherwise increase the communicative bandwidth required by the IEDP controller. A communications network may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. A network interface may be regarded as a specialized form of an input output interface. Further, multiple network interfaces **810** may be used to engage with various communications network types **813**. For example, multiple network interfaces may be employed to allow for the communication over broadcast, multicast, and/or unicast networks.

Input Output interfaces (I/O) **808** may accept, communicate, and/or connect to user input devices **811,** peripheral devices **812,** cryptographic processor devices **828**, and/or the like. I/O may employ connection protocols such as, but not limited to: audio: analog, digital, monaural, RCA, stereo, and/or the like; data: Apple Desktop Bus (ADB), IEEE 1394a-b, serial, universal serial bus (USB); infrared; joystick; keyboard; midi; optical; PC AT; PS/2; parallel; radio; video interface: Apple Desktop Connector (ADC), BNC, coaxial, component, composite, digital, Digital Visual Interface (DVI), high-definition multimedia interface (HDMI), RCA, RF antennae, S-Video, VGA, and/or the like; wireless transceivers: 802.11a/b/g/n/x; Bluetooth; cellular (e.g., code division multiple access (CDMA), high speed packet access (HSPA(+)), high-speed downlink packet access (HSDPA), global system for mobile communications (GSM), long term evolution (LTE), WiMax, etc.); and/or the like. One typical output device may include a video display, which typically comprises a Cathode Ray Tube (CRT) or Liquid Crystal Display (LCD) based monitor with an interface (e.g., DVI circuitry and cable) that accepts signals from a video interface, may be used. The video interface composites information generated by a computer systemization and generates video signals based on the composited information in a video memory frame. Another output device is a television set, which accepts signals from a video interface. Typically, the video interface provides the composited video information through a video connection interface that accepts a video display interface (e.g., an RCA composite video connector accepting an RCA composite video cable; a DVI connector accepting a DVI display cable, etc.).

User input devices **811** often are a type of peripheral device 512 (see below) and may include: card readers, dongles, finger print readers, gloves, graphics tablets, joysticks, keyboards, microphones, mouse (mice), remote controls, retina readers, touch screens (e.g., capacitive, resistive, etc.), trackballs, trackpads, sensors (e.g., accelerometers, ambient light, GPS, gyroscopes, proximity, etc.), styluses, and/or the like.

Peripheral devices **812** may be connected and/or communicate to I/O and/or other facilities of the like such as network interfaces, storage interfaces, directly to the interface bus, system bus, the CPU, and/or the like. Peripheral devices may be external, internal and/or part of the IEDP controller. Peripheral devices may include: antenna, audio devices (e.g., line-in, line-out, microphone input, speakers, etc.), cameras (e.g., still, video, webcam, etc.), dongles (e.g., for copy protection, ensuring secure transactions with a digital signature, and/or the like), external processors (for added capabilities; e.g., crypto devices 528), force-feedback devices (e.g., vibrating motors), network interfaces, printers, scanners, storage devices, transceivers (e.g., cellular, GPS, etc.), video devices (e.g., goggles, monitors, etc.), video sources, visors, and/or the like. Peripheral devices often include types of input devices (e.g., cameras).

It should be noted that although user input devices and peripheral devices may be employed, the IEDP controller may be embodied as an embedded, dedicated, and/or monitor-less (i.e., headless) device, wherein access would be provided over a network interface connection.

Cryptographic units such as, but not limited to, microcontrollers, processors **826,** interfaces **827**, and/or devices **828** may be attached, and/or communicate with the IEDP controller. A MC68HC16 microcontroller, manufactured by Motorola Inc., may be used for and/or within cryptographic units. The MC68HC16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of the CPU. Equivalent microcontrollers and/or processors may also be used. Other commercially available specialized cryptographic processors include: Broadcom's CryptoNetX and other Security Processors; nCipher's nShield; SafeNet's Luna PCI (e.g., 7100) series; Semaphore Communications' 40 MHz Roadrunner 184; Sun's Cryptographic Accelerators (e.g., Accelerator 6000 PCIe Board, Accelerator 500 Daughtercard); Via Nano Processor (e.g., L2100, L2200, U2400) line, which is capable of performing 500+ MB/s of cryptographic instructions; VLSI Technology's 33 MHz 6868; and/or the like.

**Memory**

Generally, any mechanization and/or embodiment allowing a processor to affect the storage and/or retrieval of information is regarded as memory **829**. However, memory is a fungible technology and resource, thus, any number of memory embodiments may be employed in lieu of or in concert with one another. It is to be understood that the IEDP controller and/or a computer systemization may employ various forms of memory **829**. For example, a computer systemization may be configured wherein the operation of on-chip CPU memory (e.g., registers), RAM, ROM, and any other storage devices are provided by a paper punch tape or paper punch card mechanism; however, such an embodiment would result in an extremely slow rate of operation. In a typical configuration, memory **829** will include ROM **806**, RAM **805**, and a storage device **814**. A storage device **814** may be any conventional computer system storage. Storage devices may include a drum; a (fixed and/or removable) magnetic disk drive; a magneto-optical drive; an optical drive (i.e., Blueray, CD ROM/RAM/Recordable (R)/ReWritable (RW), DVD R/RW, HD DVD R/RW etc.); an array of devices (e.g., Redundant Array of Independent Disks (RAID)); solid state memory devices (USB memory, solid state drives (SSD), etc.); other processor-readable storage mediums; and/or other devices of the like. Thus, a computer systemization generally requires and makes use of memory.

**Component Collection**

The memory **829** may contain a collection of program and/or database components and/or data such as, but not limited to: operating system component **815**; information server component **816**; user interface component **817**; IEDP database component **819**; cryptographic server component **820**; TSA Component **841**; and/or the like (i.e., collectively a component collection). The aforementioned components may be incorporated into (e.g., be sub-components of), loaded from, loaded by, or otherwise operatively available to and from the IEDP component(s) **835**.

Any component may be stored and accessed from the storage devices and/or from storage devices accessible through an interface bus. Although program components such as those in the component collection, typically, are stored in a local storage device **814**, they may also be loaded and/or stored in other memory such as: remote "cloud" storage facilities accessible through a communications network; integrated ROM memory; via an FPGA or ASIC implementing component logic; and/or the like.

**Operating System Component**

The operating system component **815** is an executable program component facilitating the operation of the IEDP controller. Typically, the operating system facilitates access of I/O, network interfaces, peripheral devices, storage devices, and/or the like. The operating system may be a highly fault tolerant, scalable, and secure system such as: Unix and Unix-like system distributions (such as AT&T's UNIX; Berkley Software Distribution (BSD) variations such as FreeBSD, NetBSD, OpenBSD, and/or the like; Linux distributions such as Red Hat, Debian, Ubuntu, and/or the like); and/or the like operating systems. However, more limited and/or less secure operating systems also may be employed such as Apple OS-X, Microsoft Windows 2000/2003/3.1/95/98/CE/Millenium/NT/Vista/XP/Win7 (Server), and/or the like. An operating system may communicate to and/or with other components in a component collection, including itself, and/or the like. Most frequently, the operating system communicates with other program components, user interfaces, and/or the like. The operating system, once executed by the CPU, may enable the interaction with communications networks, data, I/O, peripheral devices, program components, memory, user input devices, and/or the like. The operating system may provide communications protocols that allow the IEDP controller to communicate with other entities through a communications network **813**. Various communication protocols may be used by the IEDP controller as a subcarrier transport mechanism for interaction, such as, but not limited to: multicast, TCP/IP, UDP, unicast, and/or the like.

**Information Server Component**

An information server component **816** is a stored program component that is executed by a CPU. The information server may be a conventional Internet information server such as, but not limited to Apache Software Foundation's Apache, Microsoft's Internet Information Server, and/or the like. The information server may allow for the execution of program components through facilities such as Active Server Page (ASP), ActiveX, (ANSI) (Objective-) C (++), C# and/or .NET, Common Gateway Interface (CGI) scripts, dynamic (D) hypertext markup language (HTML), FLASH, Java, JavaScript, Practical Extraction Report Language (PERL), Hypertext Pre-Processor (PHP), pipes, Python, wireless application protocol (WAP), WebObjects, and/or the like. The information server may support secure communications protocols such as, but not limited to, File Transfer Protocol (FTP); HyperText Transfer Protocol (HTTP); Secure Hypertext Transfer Protocol (HTTPS), Secure Socket Layer (SSL), messaging protocols (e.g., ICQ, Internet Relay Chat (IRC), Presence and Instant Messaging Protocol (PRIM), Internet Engineering Task Force's (IETF's) Session Initiation Protocol (SIP), SIP for Instant Messaging and Presence Leveraging Extensions (SIMPLE), open XML-based Extensible Messaging and Presence Protocol (XMPP) (i.e., Jabber or Open Mobile Alliance's (OMA's) Instant Messaging and Presence Service (IMPS)), Representational State Transfer (REST) and/or the like. The information server provides results in the form of Web pages to Web browsers, and allows for the manipulated generation of the Web pages through interaction with other program components. After a Domain Name System (DNS) resolution portion of an HTTP request is resolved to a particular information server, the information server resolves requests for information at specified locations on the IEDP controller based on the remainder of the HTTP request. For example, a request such as http://123.124.125.126/myInformation.html might have the IP portion of the request "123.124.125.126" resolved by a DNS server to an information server at that IP address; that information server might in turn further parse the http request for the "/myInformation.html" portion of the request and resolve it to a location in memory containing the information "myInformation.html." Additionally, other information serving protocols may be employed across various ports, e.g., FTP communications across port 21, and/or the like. An information server may communicate to and/or with other components in a component collection, including itself, and/or facilities of the like. Most frequently, the information server communicates with the IEDP database component **819**, operating system component **815**, other program components, user interfaces, and/or the like.

Access from the Information Server Component **816** to the IEDP database component **819** may be achieved through a number of database bridge mechanisms such as through scripting languages as enumerated below (e.g., CGI) and through inter-application communication channels as enumerated below (e.g., CORBA, WebObjects, etc.). Any data requests through a Web browser are parsed through the bridge mechanism into appropriate grammars as required by the IEDP. In one embodiment, the information server would provide a Web form accessible by a Web browser. Entries made into supplied fields in the Web form are tagged as having been entered into the particular fields, and parsed as such. The entered terms are then passed along with the field tags, which act to instruct the parser to generate queries directed to appropriate tables and/or fields. In one embodiment, the parser may generate queries in standard SQL by instantiating a search string with the proper join/select commands based on the tagged text entries, wherein the resulting command is provided over the bridge mechanism to the IEDP as a query. Upon generating query results from the query, the results are passed over the bridge mechanism, and may be parsed for formatting and generation of a new results Web page by the bridge mechanism. Such a new results Web page is then provided to the information server, which may supply it to the requesting Web browser. Also, an information server may contain, communicate, generate, obtain, and/or provide program component, system, user, and/or data communications, requests, and/or responses.

User Interface Component

Computer interfaces in some respects are similar to automobile operation interfaces. Automobile operation interface elements such as steering wheels, gearshifts, and speedometers facilitate the access, operation, and display of automobile resources, and status. Computer interaction interface elements such as check boxes, cursors, menus, scrollers, and windows (collectively and commonly referred to as widgets) similarly facilitate the access, capabilities, operation, and display of data and computer hardware and operating system resources, and status. Operation interfaces are commonly called user interfaces. Graphical user interfaces (GUIs) such as the Apple Macintosh Operating System's Aqua, IBM's OS/2, Microsoft's Windows 2000/2003/3-1/95/98/CE/Millenium/NT/XP/Vista/7 (i.e., Aero), Unix's X-Windows, web interface libraries such as, but not limited to, Dojo, jQuery UI, MooTools, Prototype, script.aculo.us, SWFObject, Yahoo! User Interface, any of which may be used and provide a baseline and means of accessing and displaying information graphically to users.

A user interface component **817** is a stored program component that is executed by a CPU. The user interface may be a conventional graphic user interface as provided by, with, and/or atop operating systems and/or operating environments such as already discussed. The user interface may allow for the display, execution, interaction, manipulation, and/or operation of program components and/or system facilities through textual and/or graphical facilities. The user interface provides a facility through which users may affect, interact, and/or operate a computer system. A user interface may communicate to and/or with other components in a component collection, including itself, and/or facilities of the like. Most frequently, the user interface communicates with operating system component **815,** other program components, and/or the like. The user interface may contain, communicate, generate, obtain, and/or provide program component, system, user, and/or data communications, requests, and/or responses.

**Cryptographic Server Component**

A cryptographic server component **820** is a stored program component that is executed by a CPU **803**, cryptographic processor **826**, cryptographic processor interface **827**, cryptographic processor device **828**, and/or the like. Cryptographic processor interfaces will allow for expedition of encryption and/or decryption requests by the cryptographic component; however, the cryptographic component, alternatively, may run on a conventional CPU. The cryptographic component allows for the encryption and/or decryption of provided data. The cryptographic component allows for both symmetric and asymmetric (e.g., Pretty Good Protection (PGP)) encryption and/or decryption. The cryptographic component may employ cryptographic techniques such as, but not limited to: digital certificates (e.g., X.509 authentication framework), digital signatures, dual signatures, enveloping, password access protection, public key management, and/or the like. The cryptographic component will facilitate numerous (encryption and/or decryption) security protocols such as, but not limited to: checksum, Data Encryption Standard (DES), Elliptical Curve Encryption (ECC), International Data Encryption Algorithm (IDEA), Message Digest 5 ($MD_5$, which is a one way hash operation), passwords, Rivest Cipher ($RC_5$), Rijndael (AES), RSA, Secure Hash Algorithm (SHA), Secure Socket Layer (SSL), Secure Hypertext Transfer Protocol (HTTPS), and/or the like. Employing such encryption security protocols, the IEDP may encrypt all incoming and/or outgoing communications and may serve as node within a virtual private network (VPN) with a wider communications network. The cryptographic component facilitates the process of "security authorization" whereby access to a resource is inhibited by a security protocol wherein the cryptographic component effects authorized access to the secured resource. In addition, the cryptographic component may provide unique identifiers of content, e.g., employing and $MD_5$ hash to obtain a unique signature for an digital audio file. A cryptographic component may communicate to and/or with other components in a component collection, including itself, and/or facilities of the like. The cryptographic component supports encryption schemes allowing for the secure transmission of information across a communications network to enable the IEDP component to engage in secure transactions if so desired. The cryptographic component facilitates the secure accessing of resources on the IEDP and facilitates the access of secured resources on remote systems; i.e., it may act as a client and/or server of secured resources. Most frequently, the cryptographic component communicates with information server component **816**, operating system component **815**, other program components, and/or the like. The cryptographic component may contain, communicate, generate, obtain, and/or provide program component, system, user, and/or data communications, requests, and/or responses.

**IEDP Database Component**

The IEDP database component **819** may be embodied in a database and its stored data. The database is a stored program component, which is executed by the CPU; the stored program component portion configuring the CPU to process the stored data. The database may be a conventional, fault tolerant, relational, scalable, secure database such as Oracle or Sybase. Relational databases are an extension of a flat file. Relational databases consist of a series of related tables. The tables are interconnected via a key field. Use of the key field allows the combination of the tables by indexing against the key field; i.e., the key fields act as dimensional pivot points for combining information from various tables. Relationships generally identify links maintained between tables by matching primary keys. Primary keys represent fields that uniquely identify the rows of a table in a relational database. More precisely, they uniquely identify rows of a table on the "one" side of a one-to-many relationship.

Alternatively, the IEDP database may be implemented using various standard data-structures, such as an array, hash, (linked) list, struct, structured text file (e.g., XML), table, and/or the like. Such data-structures may be stored in memory and/or in (structured) files. In another alternative, an object-oriented database may be used, such as Frontier, ObjectStore, Poet, Zope, and/or the like. Object databases can include a number of object collections that are grouped and/or linked together by common attributes; they may be related to other object collections by some common attributes. Object-oriented databases perform similarly to relational databases with the exception that objects are not just pieces of data but may have other types of capabilities encapsulated within a given object. Also, the database may be implemented as a mix of data structures, objects, and relational structures. Databases may be consolidated and/or distributed in countless variations through standard data processing techniques. Portions of databases, e.g., tables, may be exported and/or imported and thus decentralized and/or integrated.

In one embodiment, the database component **819** includes several tables **819a-k.** A Users table **819a** may include fields such as, but not limited to: user_ID, first_name, last_name, state, license_ID, and/or the like. A Clients table **819b** may include fields such as, but not limited to: client_ID, client_name, client_ip, client_type, client_model, operating_system, os_version, and/or the like. A Licenses table **819c** may include fields such as, but not limited to: license_ID, license_expriationDate, license_role, license_privileges, and/or the like. An IEDProfile table **819d** may include fields such as, but not limited to: IED_ID, IED_model, IED_maker_ID, IED_RegressionModel_ID, IED_StatisticalModel_ID, IED_InputFactorsList, and/or the like. An InputFactors table **819e** may include fields such as, but not limited to: inputFactor_ID, inputFactor_value, and/or the like. A SubstationDesign table **819f** may include fields such as, but not limited to: sDesign_ID, sDesign_function, sDesign_IEDList, sDesign_ConnectionsList, and/or the like. An Stimuli table **819g** may include fields such as, but not limited to: stimulus_ID, stimulus_type, stimulus_value, and/or the like. An StimuliVector table **819h** may include fields such as, but not limited to: stimuli_vectorID, stimulus_IDList, and/or the like. An RegressionModels table **819i** may include fields such as, but not limited to: RM_ID, RM_function, and/or the like. An StatisticalModels table **819j** may include fields such as, but not limited to: SM_ID, SM_function, and/or the like. An IEDMaker table **819k** may include fields such as, but not limited to: IED_makerID, IED_makerName, IED_description, and/or the like. Any of the aforementioned tables may support and/or track multiple entities, accounts, users and/or the like.

In one embodiment, the IEDP database component may interact with other database systems. For example, when employing a distributed database system. In such an embodiment, queries and data access by any IEDP component may treat the combination of the IEDP database component results and results from a second segment in a distributed database system as an integrated database layer. Such a database layer may be accessed as a single database entity, for example through IEDP database component 819, by any IEDP component.

In one embodiment, user programs may contain various user interface primitives, which may serve to update the IEDP. Also, various accounts may require custom database tables depending upon the environments and the types of clients the IEDP may need to serve. It should be noted that any unique fields may be designated as a key field throughout. In an alternative embodiment, these tables have been decentralized into their own databases and their respective database controllers (i.e., individual database controllers for each of the above tables). Employing standard data processing techniques, one may further distribute the databases over several computer systemizations and/or storage devices. Similarly, configurations of the decentralized database controllers may be varied by consolidating and/or distributing the various database components **819a-k.** The IEDP may be configured to keep track of various settings, inputs, and parameters via database controllers.

The IEDP database may communicate to and/or with other components in a component collection, including itself, and/or facilities of the like. Most frequently, the IEDP database communicates with the IEDP component, other program components, and/or the like. The database may contain, retain, and provide information regarding other nodes and data.

**IEDP Component**

The IEDP component **835** is a stored program component that is executed by a CPU. In one embodiment, the IEDP component incorporates any and/or all combinations of the aspects of the IEDP that was discussed in the previous figures. As such, the IEDP affects accessing, obtaining and the provision of information, services, transactions, and/or the like across various communications networks. The features and embodiments of the IEDP discussed herein increase network efficiency by reducing data transfer requirements the use of more efficient data structures and mechanisms for their transfer and storage. As a consequence, more data may be transferred in less time, and latencies with regard to data processing operations and transactions, are also reduced. In many cases, such reduction in storage, transfer time, bandwidth requirements, latencies, etc., will reduce the capacity and structural infrastructure requirements to support the IEDP's features and facilities, and in many cases reduce the costs, energy consumption/requirements, and extend the life of IEDP's underlying infrastructure; this has the added benefit of making the IEDP more reliable. Similarly, many of the features and mechanisms are designed to be easier for users to use and access, thereby broadening the audience that may enjoy/employ and exploit the feature sets of the IEDP; such ease of use also helps to increase the reliability of the IEDP. In addition, the feature sets include heightened security as noted via the Cryptographic components **820, 826, 828** and throughout, making access to the features and data more reliable and secure.

The IEDP component may transform IED substation designs or arrangements comprising, one or more IED profiles, a plurality of input factors or configurations and a set of stimuli triggers, via various components described herein, into estimated and predicted performance metrics' values for example, response time, system reports and/or IED specific reports. In one embodiment, the IEDP component **835** takes inputs (e.g., launch IED analyzer **203**, select IED representations **204**, an IED substation design or arrangement comprising input factors **209,** IED library display request **206**, a substation design or arrangement performance analysis request **213,** stimuli triggers **405** and/or the like) etc., and transforms the inputs via various components (e.g., TSA component **841**, and/or the like), into outputs (e.g., IED library display response **207**, performance values **211** performance report **311**, IED related reports **706**, system related reports **705** and/or the like).

The IEDP component enabling access of information between nodes may be developed by employing standard development tools and languages such as, but not limited to: Apache components, Assembly, ActiveX, binary executables, (ANSI) (Objective-) C (++), C# and/or .NET, database adapters, CGI scripts, Java, JavaScript, mapping tools, procedural and object oriented development tools, PERL, PHP, Python, shell scripts, SQL commands, web application server extensions, web development environments and libraries (e.g., Microsoft's ActiveX; Adobe AIR, FLEX & FLASH; AJAX; (D)HTML; Dojo, Java; JavaScript; jQuery; jQuery UI; MooTools; Prototype; script.aculo.us; Simple Object Access Protocol (SOAP); SWFObject; Yahoo! User Interface; and/or the like), WebObjects, and/or the like. In one embodiment, the IEDP server employs a cryptographic server to encrypt and decrypt communications. The IEDP component may communicate to and/or with other components in a component collection, including itself, and/or facilities of the like. Most frequently, the IEDP component communicates with the IEDP database component **819,** operating system component **815,** other program components, and/or the like. The IEDP may contain, communicate, generate, obtain, and/or provide program component, system, user, and/or data communications, requests, and/or responses.

**Distributed IEDP Components**

The structure and/or operation of any of the IEDP node controller components may be combined, consolidated, and/or distributed in any number of ways to facilitate development and/or deployment. Similarly, the component collection may be combined in any number of ways to facilitate deployment and/or development. To accomplish this, one may integrate the components into a common code base or in a facility that can dynamically load the components on demand in an integrated fashion.

The component collection may be consolidated and/or distributed in countless variations through standard data processing and/or development techniques. Multiple instances of any one of the program components in the program component collection may be instantiated on a single node, and/or across numerous nodes to improve performance through load-balancing and/or data-processing techniques. Furthermore, single instances may also be distributed across multiple controllers and/or storage devices; e.g., databases. All program component instances and controllers working in concert may do so through standard data processing communication techniques.

The configuration of the IEDP controller will depend on the context of system deployment. Factors such as, but not limited to, the budget, capacity, location, and/or use of the underlying hardware resources may affect deployment requirements and configuration. Regardless of if the configuration results in more consolidated and/or integrated program components, results in a more distributed series of program components, and/or results in some combination between a consolidated and distributed configuration, data may be communicated, obtained, and/or provided. Instances of components consolidated into a common code base from the program component collection may communicate, obtain, and/or provide data. This may be accomplished through intra-application data processing communication techniques such as, but not limited to: data referencing (e.g., pointers), internal messaging, object instance variable communication, shared memory space, variable passing, and/or the like.

If component collection components are discrete, separate, and/or external to one another, then communicating, obtaining, and/or providing data with and/or to other component components may be accomplished through inter-application data processing communication techniques such as, but not limited to: Application Program Interfaces (API) information passage; (distributed) Component Object Model ((D)COM), (Distributed) Object Linking and Embedding ((D)OLE), and/or the like), Common Object Request Broker Architecture (CORBA), Jini local and remote application program interfaces, JavaScript Object Notation (JSON), Remote Method Invocation (RMI), SOAP, Representational State Transfer (REST), process pipes, shared files, and/or the like. Messages sent between discrete component components for inter-application communication or within memory spaces of a singular component for intra-application communication may be facilitated through the creation and parsing of a grammar. A grammar may be developed by using development tools such as lex, yacc, XML, and/or the like, which allow for grammar generation and parsing capabilities, which in turn may form the basis of communication messages within and between components.

For example, a grammar may be arranged to recognize the tokens of an HTTP post command, e.g.:

    w3c -post http://... Value1

where Value1 is discerned as being a parameter because "http://" is part of the grammar syntax, and what follows is considered part of the post value. Similarly, with such a grammar, a variable "Value1" may be inserted into an "http://" post command and then sent. The grammar syntax itself may be presented as structured data that is interpreted and/or otherwise used to generate the parsing mechanism (e.g., a syntax description text file as processed by lex, yacc, etc.). Also, once the parsing mechanism is generated and/or instantiated, it itself may process and/or parse structured data such as, but not limited to: character (e.g., tab) delineated text, HTML, structured text streams, XML, and/or the like structured data. Further, the parsing grammar may be used beyond message parsing, but may also be used to parse: databases, data collections, data stores, structured data, and/or the like. Again, the desired configuration will depend upon the context, environment, and requirements of system deployment.

**Additional IEDP Configurations**

In order to address various issues and advance the art, the entirety of this application for IEDP (including the Cover Page, Title, Headings, Field, Background, Summary, Brief Description of the Drawings, Detailed Description, Claims, Abstract, Figures, Appendices, and otherwise) shows, by way of illustration, various embodiments in which the claimed innovations may be practiced. The advantages and features of the application are of a representative sample of embodiments only, and are not exhaustive and/or exclusive. They are presented only to assist in understanding and teach the claimed principles. It should be understood that they are not representative of all claimed innovations. As such, certain aspects of the disclosure have not been discussed herein. That alternate embodiments may not have been presented for a specific portion of the innovations or that further undescribed alternate embodiments may be available for a portion is not to be considered a disclaimer of those alternate embodiments. It will be appreciated that many of those undescribed embodiments incorporate the same principles of the innovations and others are equivalent. Thus, it is to be understood that other embodiments may be utilized and functional, logical, operational, organizational, structural and/or topological modifications may be made without departing from the scope and/or spirit of the disclosure. As such, all examples and/or embodiments are deemed to be non-limiting throughout this disclosure. Also, no inference should be drawn regarding those embodiments discussed herein relative to those not discussed herein other than it is as such for purposes of reducing space and repetition. For instance, it is to be understood that the logical and/or topological structure of any combination of any program components (a component collection), other components and/or any present feature sets as described in the figures and/or throughout are not limited to a fixed operating order and/or arrangement, but rather, any disclosed order is exemplary and all equivalents, regardless of order, are contemplated by the disclosure. Furthermore, it is to be understood that such features are not limited to serial execution, but rather, any number of threads, processes, services, servers, and/or the like that may execute asynchronously, concurrently, in parallel, simultaneously, synchronously, and/or the like are contemplated by the disclosure. As such, some of these features may be mutually contradictory, in that they cannot be simultaneously present in a single embodiment. Similarly, some features are applicable to one aspect of the innovations, and inapplicable to others. In addition, the disclosure includes other innovations not presently claimed. Applicant reserves all rights in those presently unclaimed innovations including the right to claim such innovations, file additional applications, continuations, continuations-in-part, divisionals, and/or the like thereof. As such, it should be understood that advantages, embodiments, examples, functional, features, logical, operational, organizational, structural, topological, and/or other aspects of the disclosure are not to be considered limitations on the disclosure as defined by the claims or limitations on equivalents to the claims. It is to be understood that, depending on the particular needs and/or characteristics of a IEDP individual and/or enterprise user, database configuration and/or relational model, data type, data transmission and/or network framework, syntax structure, and/or the like, various embodiments of the IEDP, may be implemented that enable a great deal of flexibility and customization as described herein.

**Claims**

1. A processor-implemented method for determining an expected overall performance value of a substation automation system, the method comprising causing a processor to perform the following steps:

   providing a plurality of virtual Intelligent Electronic Device (IED) representations, each virtual IED representation being associated with a respective data structure defining a previously generated physical IED performance profile;
   obtaining a data structure defining an arrangement of the provided plurality of virtual IED representations, the arrangement relating to a substation automation system test configuration;
   receiving data defining arrangement stimulation test values; and
   determining an expected overall performance value of the arrangement by combining performance metrics for each of the virtual IED representations in the arrangement in accordance with the arrangement, the performance metric for each of the virtual IED representations being retrieved from the respective data structure defining the previously generated physical IED performance profile by addressing the data structure using the arrangement stimulation test values.

2. The method of claim 1, further comprising generating one or more of the physical IED performance profiles by performing a descriptive statistical analysis and an inferential statistical analysis on measured values of an IED performance metric to determine an expected value for the IED performance metric.

3. The method of claim 2, wherein the generation of one or more of the physical IED performance profiles further comprises performing an additional inferential statistical analysis, wherein the additional inferential statistical analysis is a regression analysis of at least one independent control variable affecting an IED performance metric, whereby the expected value for the IED performance metric is determined under a plurality of stress conditions.

4. The method of any of the preceding claims, further comprising optimizing the expected overall performance value of the arrangement using a single variable optimization algorithm or a multi-variable optimization algorithm.

5. The method of any of the preceding claims, wherein the arrangement stimulation test values comprise stimuli triggers and input factors.

6. The method of claim 5, wherein the stimuli triggers comprise generic object oriented substation event (GOOSE) transmissions, fault level currents, sample measurement values and opto-inputs.

7. The method of claim 5 or claim 6, wherein the input factors comprise a number of configured GOOSE control blocks, a number of GOOSE messages received by the IED at the same time as a stimulus trigger, a number of virtual output states changed by a stimulus trigger, manufacture message specification report, web services, internal logic schemes, and inputs from a human machine interface.

8. A processor-implemented method for creating a physical IED performance profile for an IED, the method comprising causing a processor to perform the following steps:

generating stimulation test values for stimulating an IED;
measuring a plurality of performance metrics of the IED corresponding to the stimulation test values;
performing a descriptive statistical analysis and an inferential statistical analysis on the plurality of performance metrics to determine expected values of the plurality of performance metrics; and
generating a data structure defining the physical IED performance profile, in which the expected values of the plurality of performance metrics are addressable using the stimulation test values.

9. A method according to claim 8, further comprising performing an additional inferential statistical analysis to determine expected values of the plurality of performance metrics, wherein the additional inferential statistical analysis is a regression analysis of at least one independent control variable affecting an IED performance metric, whereby the expected value for the IED performance metric is determined under a plurality of stress conditions.

10. A method according to claim 8 or 9, wherein the stimulation test values comprise stimuli triggers and input factors.

11. A method according to claim 10, wherein the stimuli triggers comprise GOOSE transmissions, fault level currents, sample measurement values and opto-inputs.

12. The method of claim 10 or claim 11, wherein the input factors comprise a number of configured GOOSE control blocks, a number of GOOSE messages received by the IED at the same time as a stimulus trigger, a number of virtual output states changed by a stimulus trigger, manufacture message specification report, web services, internal logic schemes, and inputs from a human machine interface.

13. The method of any of claims 8 to 12, further comprising configuring the IED to behave as a device selected from the group comprising: (a) breaker controllers; (b) voltage regulators; (c) remote terminal units; (d) load tap changers; (e) recloser controllers; (f) digital fault recorders; and (g) programmable logic controllers.

14. A non-transitory processor-readable medium storing code representing instructions to be executed by a processor, the code comprising instructions to cause the processor to perform the method of any of the preceding claims when executed.

15. An apparatus comprising a processor and a memory disposed in communication with the processor and storing instructions which cause the processor to perform the method of any of claims 1 to 13 when executed.

**Figure 1**

Example of comprising elements engaged in the development of an IED performance profile.

**Figure 2**

Exemplary use cases of the IED integrated design environment.

User 3 01        Test Set Application Component 3 02

3 03

Substation design/ arrangement performance analysis request

Start

2B

3 04

Load IEDs comprised in the arrangement ($IEDSet)

3 05

foreach($IEDSet AS $IEDCurrent)

3 06

Retrieve input factors and IED performance profile

3 07

Configure performance profile with input factors

3 08

next ($IEDCurrent) == TRUE

YES

NO

3 09

Load test vectors $StimuliVectors for the IED arrangement

3 10

foreach($StimuliVectors AS $CurrentSV)

3 11

Input $CurrentSV into IED arrangement

3 12

Record IED arrangement performance values

3 13

next ($CurrentSV) == TRUE

YES

NO

2B

**Figure 3A**       Example of Test Set Application component to capture performance value. e.g., **TSA component.**.

User <u>3 01</u>      IED Test Set Application Component <u>3 02</u>

**Figure 3B**      Example of Test Set Application component to capture performance value. e.g., **TSA component.**.

Tg  4 04

GOOSE
4 03

Ti  4 09          Tg1  4 10          Tmr
                                     4 11

4 05   In

IED                    4 01

IED Device Profiling Environment                    4 02

Figure 4A

Example of GOOSE response time measurements for an IED

EP 3 026 519 A1

Figure 4B

Example of hardwired response time measurements for an IED

**Figure 5**

Example of sampling technique of performance values of an IED for profile generation

601

IED 1    IED 2    IED 3    IED N

Exemplary IED arrangement that built in the IED integrated development environment.

Figure 6A

6 02

IED 1

IED 2

IED N-1

IED N

Figure 6B

Exemplary IED arrangement built in the IED integrated development environment.

EP 3 026 519 A1

Figure 6C                                      Exemplary IED arrangement built in the IED integrated development environment.

Automated Import process

IED Device Profiling Environment

7 01

IEDP Server 7 11

IED Related Reports 7 06

System Related Reports 7 05

Web Services 7 04

IED Integrated Design Environment 7 03

Database Server 7 02

7 09

7 08

7 07

7 10

**Figure 7**

Example of an IED design and testing information system implemented in a service oriented paradigm structure.

Figure 8

Europäisches
Patentamt

European
Patent Office

Office européen
des brevets

## PARTIAL EUROPEAN SEARCH REPORT

Application Number

under Rule 62a and/or 63 of the European Patent Convention.
This report shall be considered, for the purposes of
subsequent proceedings, as the European search report

EP 15 19 6145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 684 566 A1 (EDSA MICRO CORP [US]) 20 November 2008 (2008-11-20) * page 1 - page 89; figures 1-27 * | 1-7,14, 15 | INV. G05B23/02 G06F11/34 G06Q50/06 |
| X | APOSTOLOV A ET AL: "Functional testing of IEC 61850 based IEDs and systems", POWER SYSTEMS CONFERENCE AND EXPOSITION, 2004. IEEE PES NEW YORK CITY, NY, USA 10-13 OCT. 2004, PISCATAWAY, NJ, USA,IEEE, PISCATAWAY, NJ, USA, 10 October 2004 (2004-10-10), pages 1683-1688, XP010788023, DOI: 10.1109/PSCE.2004.1397723 ISBN: 978-0-7803-8718-8 * the whole document * | 1-7,14, 15 | |

TECHNICAL FIELDS
SEARCHED      (IPC)

G05B
G06F
G06Q

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 25 April 2016 | Barriuso Poy, Alex |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&amp; : member of the same patent family, corresponding
    document

EPO FORM 1503 03.82 (P04E07)

Europäisches
Patentamt

European
Patent Office

Office européen
des brevets

**INCOMPLETE SEARCH
SHEET C**

Application Number

EP 15 19 6145

```
Claim(s) completely searchable:
      1-7, 14, 15

Claim(s) not searched:
      8-13

Reason for the limitation of the search:

see applicant's letter dated 24 March 2016 written in response to the
invitation pursuant R.62a(1) EPC dated 24 February 2016
```

## ANNEX TO THE EUROPEAN SEARCH REPORT
## ON EUROPEAN PATENT APPLICATION NO.

EP 15 19 6145

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2016

| Patent document cited in search report | | Publication date | Patent family member(s) | | Publication date |
|---|---|---|---|---|---|
| CA 2684566 | A1 | 20-11-2008 | AU 2008251610 A1 | | 20-11-2008 |
| | | | CA 2684566 A1 | | 20-11-2008 |
| | | | EP 2147411 A1 | | 27-01-2010 |
| | | | WO 2008141046 A1 | | 20-11-2008 |

EPO FORM P0459

For more details about this annex : see Official Journal of the European Patent Office, No. 12/82